# EUROPEAN PATENT APPLICATION

(11) **EP 3 783 555 A1**
(43) Date of publication of application: **24.02.2021**
(21) Application number: 19909817.9
(22) Date of filing: 25.12.2019
(51) Int. Cl.: G06Q 20/12, G06F 21/10

(54) **ELECTRONIC CONTENT USE SYSTEM, PROGRAM, AND ELECTRONIC CONTENT USE METHOD**

(30) Priority: 15.01.2019 JP 2019004714
(71) Applicant: Square Enix Holdings Co., Ltd., Tokyo 160-8430 (JP)
(72) Inventor: UEHARA Hideaki, Tokyo 160-8430 (JP)
(74) Representative: Pitchford, James Edward
(86) International application number: PCT/JP2019/051023
(87) International publication number: WO 2020/149132

(57) **Abstract**

To provide a new system for utilizing the electronic content is an object.

An electronic content utilization system that comprises a first client apparatus and a second client apparatus, the system comprising:
a usage disabler that sets an electronic content available in the first client apparatus to be in an unavailable state; and a usage enabler that sets the electronic content set in the unavailable state in the first client apparatus to be in an available state in the second client apparatus, wherein the usage enabler sets the electronic content to be in the available state in the second client apparatus when a predetermined condition for usage is satisfied.

## Description

### Technical Field

The present invention relates to an electronic content utilization system, a computer-readable recording medium, and an electronic content utilization method.

### Background Art

In the related art, there is a download sales method in which a content (hereinafter, also referred to as an electronic content) provided by an electromagnetic method is downloaded and purchased.

Incidentally, it is possible to electromagnetically copy data of the electronic content. Since the copy data which is functionally equivalent to the original data can be generated, there is a technology for preventing the electronic content from being illegally copied (for example, Patent Literature 1).

### Citation List

### Patent literature

Patent Literature 1: JP-H07-262001A

### Summary of Invention

### Technical Problem

When the copy data is distributed in the market, the provider of the electronic content cannot acquire benefits which can be originally acquired, and suffers losses. Thus, the provider of the electronic content desires a new method of providing the electronic content.

An object of at least one embodiment of the present invention is to provide a new system for utilizing an electronic content.

### Solution to Problem

According to a non-limiting aspect, an electronic content utilization system according to the present invention is an electronic content utilization system that comprises a first client apparatus and a second client apparatus, the system comprising: a usage disabler that sets an electronic content available in the first client apparatus to be in an unavailable state; and a usage enabler that sets the electronic content set in the unavailable state in the first client apparatus to be in an available state in the second client apparatus, wherein the usage enabler sets the electronic content to be in the available state in the second client apparatus when a predetermined condition for usage is satisfied.

According to a non-limiting aspect, a program according to the present invention is a program causing a first client apparatus to function in an electronic content utilization system that comprises the first client apparatus and a second client apparatus, and comprises a usage enabler that sets an electronic content set in an unavailable state in the first client apparatus to be in an available state in the second client apparatus, and wherein the usage enabler sets the electronic content to be in the available state in the second client apparatus when a predetermined condition for usage is satisfied, the program causing the first client apparatus to function as a usage disabler that sets the electronic content available in the first client apparatus to be in the unavailable state.

According to a non-limiting aspect, a program according to the present invention is a program causing a second client apparatus to function in an electronic content utilization system that comprises a first client apparatus, and the second client apparatus, and comprises a usage disabler that sets an electronic content available in the first client apparatus to be in an unavailable state, the program causing the second client apparatus to function as a usage enabler that sets the electronic content set in the unavailable state in the first client apparatus to be in an available state in the second client apparatus, wherein the usage enabler sets the electronic content to be in the available state in the second client apparatus when a predetermined condition for usage is satisfied.

According to a non-limiting aspect, an electronic content utilization method according to the present invention is an electronic content utilization method performed in an electronic content utilization system that comprises a first client apparatus and a second client apparatus, the method comprising: setting an electronic content available in the first client apparatus to be in an unavailable state; and setting the electronic content set in the unavailable state in the first client apparatus to be in an available state in the second client apparatus, wherein, in the setting of the electronic content to be in the available state in the second client apparatus, the electronic content is set to be in the available state in the second client apparatus when a predetermined condition for usage is satisfied.

According to a non-limiting aspect, an electronic content utilization system according to the present invention is an electronic content utilization system that comprises a first client apparatus, a second client apparatus, a mediation server apparatus capable of being connected to the first client apparatus and the second client apparatus through communication, and a management server apparatus capable of being connected to the mediation server apparatus through communication, the system comprising: a usage disabler that sets an electronic content to be in an unavailable state in the first client apparatus when a transfer request of the electronic content available in the first client apparatus is received by the mediation server apparatus from the first client apparatus and/or a buying request of the electronic content is received by the mediation server apparatus from the second client apparatus; and a usage enabler that sets the electronic content set in the unavailable state in the first client apparatus to be in an available state in the second client apparatus when the buying request of the electronic content is received by the mediation server apparatus from the second client apparatus, wherein the mediation server apparatus comprises a trading information transmitter that transmits trading information regarding selling of the electronic content in the first client apparatus and/or buying of the electronic content in the second client apparatus to the management server apparatus, and wherein the management server apparatus comprises a trading information receiver that receives the trading information from the mediation server apparatus.

### Advantageous Effects of Invention

One or more of the above problems can be solved with each embodiment of the present invention.

### Brief Description of Drawings

Fig. 1 is a block diagram showing a configuration of the system corresponding at least one of the embodiments of the present invention.
Fig. 2 is a flowchart of the execution process corresponding to at least one of the embodiments of the present invention.
Fig. 3 is a block diagram showing a configuration of a system corresponding to at least one of the embodiments of the present invention.
Fig. 4 is a flowchart of the execution process corresponding to at least one of the embodiments of the present invention.
Fig. 5 is a block diagram showing a configuration of a system corresponding to at least one of the embodiments of the present invention.
Fig. 6 is a block diagram showing a configuration of the client apparatus corresponding to at least one of the embodiments of the present invention.
Fig. 7 is a block diagram showing a configuration of a system corresponding to at least one of the embodiments of the present invention.
Fig. 8 is a flowchart of the execution process corresponding to at least one of the embodiments of the present invention.
Fig. 9 is a block diagram showing a configuration of a system corresponding to at least one of the embodiments of the present invention.
Fig. 10 is a block diagram showing a configuration of a management server apparatus corresponding to at least one of the embodiments of the present invention.
Fig. 11 is a block diagram showing a configuration of a system corresponding to at least one of the embodiments of the present invention.
Fig. 12 is a flowchart of the execution process corresponding to at least one of the embodiments of the present invention.
Fig. 13 is a block diagram showing a configuration of a client apparatus corresponding to at least one of the embodiments of the present invention.
Fig. 14 is a flowchart of the program execution process corresponding to at least one of the embodiments of the present invention.
Fig. 15 is a block diagram showing a configuration of a client apparatus corresponding to at least one of the embodiments of the present invention.
Fig. 16 is a flowchart of the program execution process corresponding to at least one of the embodiments of the present invention.
Fig. 17 is a block diagram showing a configuration of a system corresponding to at least one of the embodiments of the present invention.
Fig. 18 is a flowchart of the execution process corresponding to at least one of the embodiments of the present invention.
Fig. 19 is a block diagram showing a configuration of a system corresponding to at least one of the embodiments of the present invention.
Fig. 20 is a block diagram showing a configuration of a system corresponding to at least one of the embodiments of the present invention.
Fig. 21 is a flowchart of the selling execution process corresponding to at least one of the embodiments of the present invention.
Fig. 22 is a flowchart of the purchase (buying) execution process corresponding to at least one of the embodiments of the present invention.
Fig. 23 is a block diagram showing a configuration of a first client apparatus corresponding to at least one of the embodiments of the present invention.
Fig. 24 is a flowchart of the program execution process corresponding to at least one of the embodiments of the present invention.
Fig. 25 is a block diagram showing a configuration of a second client apparatus corresponding to at least one of the embodiments of the present invention.
Fig. 26 is a flowchart of the program execution process corresponding to at least one of the embodiments of the present invention.
Fig. 27 is a block diagram showing a configuration of a mediation server apparatus corresponding to at least one of the embodiments of the present invention.
Fig. 28 is a flowchart of the program execution process corresponding to at least one of the embodiments of the present invention.
Fig. 29 is a block diagram showing a configuration of a management server apparatus corresponding to at least one of the embodiments of the present invention.
Fig. 30 is a flowchart of the program execution process corresponding to at least one of the embodiments of the present invention.
Fig. 31 is a schematic diagram showing an outline of the system corresponding to at least one of the embodiments of the present invention.
Fig. 32 is a schematic diagram showing an outline of the system corresponding to at least one of the embodiments of the present invention.
Fig. 33 is a schematic diagram for describing the distributed ledger technology corresponding to at least one of the embodiments of the present invention.
Fig. 34 is a diagram showing a sales screen of the electronic content corresponding to at least one of the embodiments of the present invention.
Fig. 35 is a block diagram showing a configuration of a system corresponding to at least one of the embodiments of the present invention.
Fig. 36 is a flowchart of the execution process corresponding to at least one of the embodiments of the present invention.
Fig. 37 is a block diagram showing a configuration of a system corresponding to at least one of the embodiments of the present invention.
Fig. 38 is a flowchart of the execution process corresponding to at least one of the embodiments of the present invention.

### Description of Embodiments

Hereinafter, embodiments of the invention will be described with reference to the accompanying drawings. Hereinafter, description relating to effects shows an aspect of the effects of the embodiments of the invention and does not limit the effects. Further, the order of respective processes that form a flowchart described below may be changed in a range without contradicting or creating discord with the processing contents thereof.

### First embodiment

Initially, an outline of a first embodiment of the present invention will be described. In the following, an electronic content utilization system that includes a first client apparatus and a second client apparatus will be described as an example of the first embodiment.

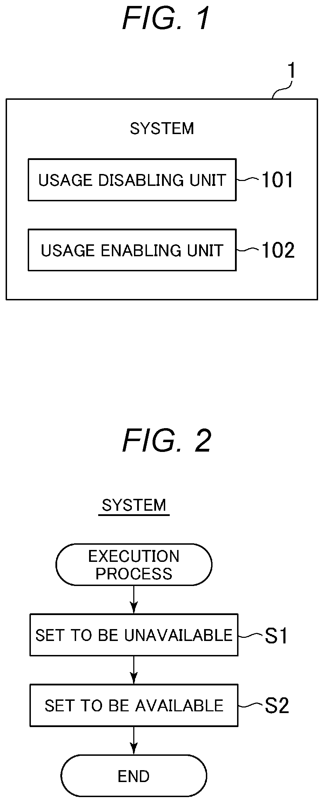

Fig. 1 is a block diagram showing a configuration of the system corresponding at least one of the embodiments of the present invention. A system 1 includes at least a usage disabling unit 101 and a usage enabling unit 102.

The usage disabling unit 101 has a function of setting an electronic content available in the first client apparatus to be in an unavailable state. The usage enabling unit 102 has a function of setting the electronic content set in the unavailable state in the first client apparatus to be in an available state in the second client apparatus.

The usage enabling unit 102 sets the electronic content to be in the available state in the second client apparatus when a predetermined condition for usage is satisfied.

Next, an execution process of utilizing the electronic content according to the first embodiment of the present invention will be described. Fig. 2 is a flowchart of the execution process corresponding to at least one of the embodiments of the present invention.

The system 1 sets the electronic content available in the first client apparatus to be in the unavailable state (step S1). Subsequently, the system 1 sets the electronic content set in the unavailable state in the first client apparatus to be in the available state in the second client apparatus (step S2), and terminates the process.

It is possible to provide a new system for utilizing the electronic content as one aspect of the first embodiment.

In the first embodiment, the "client apparatus" is, for example, a mobile phone, a smartphone, a tablet computer, a personal computer, a portable game console, a stationary game console, or a wearable terminal. The "electronic content" is, for example, a game content, an electronic publication, a program such as animation, TV program, or movie, a content recorded by music, audio, and video, a computer application, or other forms of information capable of being transmitted via a communication network.

In the first embodiment, the "usage" is, for example, the display, playback, or execution of the electronic content. For example, the "available" means that the electronic content is available in the client apparatus, and specifically, is a state in which a permission to be utilized in the client apparatus is given and the usage of the electronic content is permitted. For example, the unavailable" means that the electronic content is not available in the client apparatus, and specifically, is a state in which the permission to be utilized in the client apparatus is not given and the usage restricted.

In the first embodiment, the "system" is, for example, a mechanism in which a plurality of elements that influences each other is present. More specifically, the system is a mechanism in which a plurality of computer apparatuses is connected or a mechanism of an apparatus constituted by a plurality of members included in the computer apparatus.

### Second embodiment

Next, an outline of a second embodiment of the present invention will be described. In the following, an electronic content utilization system that includes a first client apparatus, a second client apparatus, and a management server apparatus will be described as an example.

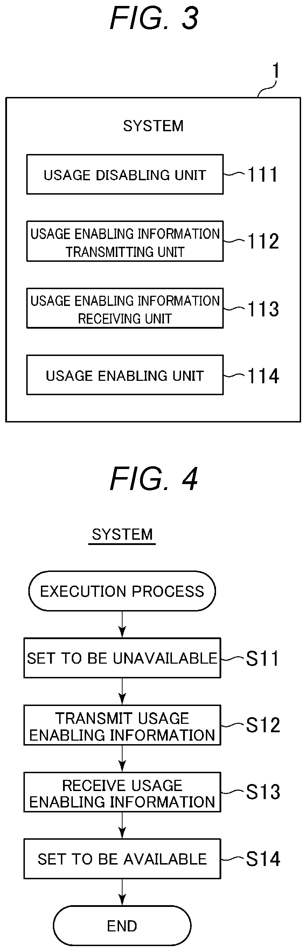

Fig. 3 is a block diagram showing a configuration of a system corresponding to at least one of the embodiments of the present invention. A system 1 includes at least a usage disabling unit 111, a usage enabling information transmitting unit 112, a usage enabling information receiving unit 113, and a usage enabling unit 114.

The usage disabling unit 111 has a function of setting an electronic content available in the first client apparatus to be in an unavailable state. The usage enabling information transmitting unit 112 has a function of transmitting usage enabling information for setting the electronic content in the second client apparatus to be in the available state to the second client apparatus when a billing process is performed by a second user who operates the second client apparatus.

The usage enabling information receiving unit 113 has a function of enabling the second client apparatus to receive the usage enabling information from the management server apparatus. The usage enabling unit 114 has a function of setting the electronic content set in the unavailable state in the first client apparatus to be in an available state in the second client apparatus.

The usage enabling unit 114 sets the electronic content to be in the available state in the second client apparatus when a predetermined condition for usage is satisfied. The condition for usage includes a condition in which the usage enabling information received by the second client apparatus is usage enabling information corresponding to an electronic content as a target for usage enabling.

In the second embodiment, a procedure related to the enabling of the usage is to enable the electronic content to be available in the second client apparatus by using the usage enabling information transmitted by the management server apparatus, and is not limited to this aspect. For example, the management server apparatus may receive and store information (for example, data constituting the electronic content) regarding the electronic content from the first client apparatus. The second client apparatus may transmit a request for the stored information regarding the electronic content to the management server apparatus, and may receive the electronic content from the management server apparatus. Alternatively, for example, it may be modified so that the data of the electronic content is stored in another server apparatus, and may be available by changing an access permission to another server apparatus.

As one aspect of the second embodiment, it is possible to provide a new system for utilizing the electronic content.

As one aspect of the second embodiment, when the usage enabling information received by the second client apparatus is the usage enabling information corresponding to the electronic content as the target for usage, it is possible to appropriately manage the electronic content by setting the electronic content to be available in the second client apparatus.

In the second embodiment, the "client apparatus", the "electronic content", the "usage", the "available", and the "system" can adopt the contents described in the first embodiment in a necessary range.

In the second embodiment, the "management server apparatus" is, for example, an apparatus that executes processes according to requests from the client apparatus. The "billing process" is, for example, a process of accepting a payment of a fee for utilizing the electronic content from a user. The payment of the fee may be, for example, a physical payment using cash or a payment by an electromagnetic method using a credit card, an electronic money, or a point.

In the second embodiment, the "usage enabling information" is, for example, information for setting the electronic content to be available. More specifically, the usage enabling information may be information for decrypting an encrypted electronic content or information for authenticating the electronic content by performing an arithmetic process by using a code assigned to the electronic content in advance.

### Third embodiment

Next, an outline of a third embodiment of the present invention will be described. In the following, an electronic content utilization system that includes a first client apparatus and a second client apparatus will be described as an example of the third embodiment. In the third embodiment, the system in which the first client apparatus and the second client apparatus are connected so as to deliver an electronic file to each other by using a peer-to-peer (P2P) technology is used. Such a system can be realized by using middleware specialized in transmitting and receiving electronic data through communication. Electronic contents which are obtained by the user through legitimate means and are provided by an electronic content provider are stored in the first client apparatus.

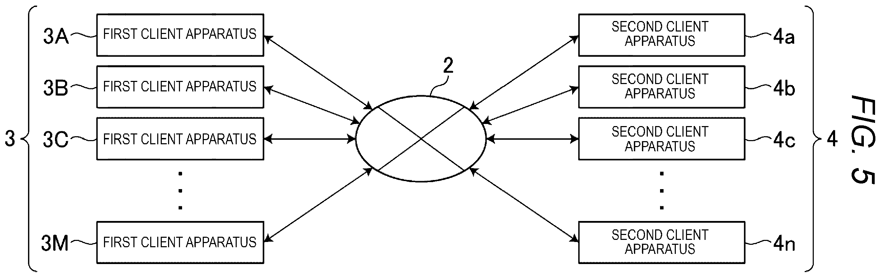

Fig. 5 is a block diagram showing a configuration of a system corresponding to at least one of the embodiments of the present invention. As shown in this diagram, the system includes a plurality of first client apparatuses 3 (first client apparatuses 3A, 3B, 3C, ···, and 3M) operated by a plurality of players (users A, B, C, ···, and M), a communication network 2, and second client apparatuses 4 (second client apparatuses 4a, 4b, 4c, ···, and 4n) operated by a plurality of players (users a, b, c, ···, and n). M and n are any integers. The first client apparatus 3 is connected to the second client apparatus 4 via the communication network 2. The first client apparatuses 3 and the second client apparatuses 4 may not be constantly connected, or may be connected as needed.

In Fig. 5, M number of first client apparatuses 3 and n number of second client apparatuses 4 are connected so as to communicate with each other, and the embodiment of the present invention is not limited thereto. For example, one first client apparatus 3 and one second client apparatus 4 may be connected so as to communicate with each other.

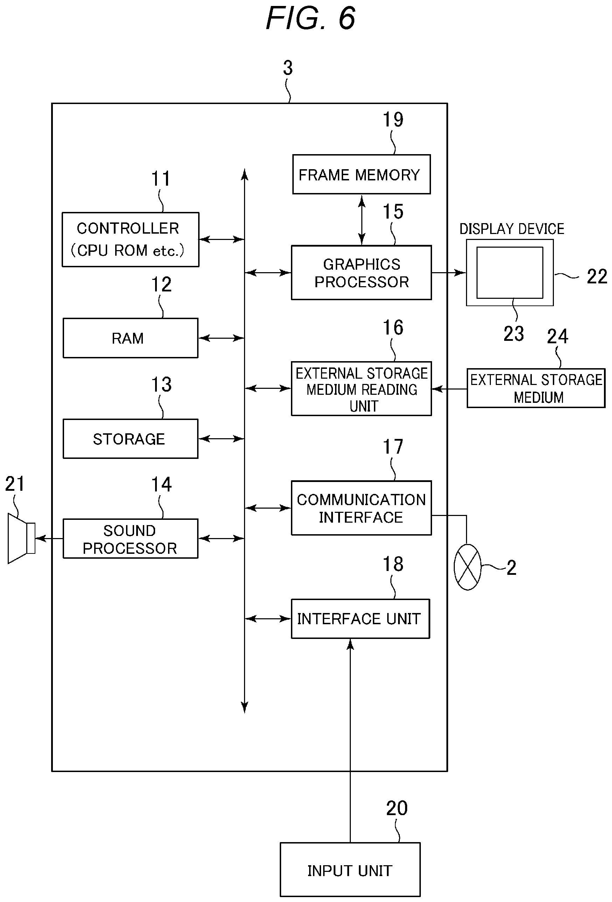

Fig. 6 is a block diagram showing a configuration of the client apparatus corresponding to at least one of the embodiments of the present invention. The first client apparatus 3 includes at least a controller 11, a random access memory (RAM) 12, a storage 13, a sound processor 14, a graphics processor 15, an external storage medium reading unit 16, a communication interface 17, and an interface unit 18, and these units are connected through an internal bus.

The controller 11 includes a central processing unit (CPU) and a read only memory (ROM). The controller 11 executes a program stored in the storage 13 or an external storage medium 24 and controls the first client apparatus 3. The controller 11 includes an internal timer that measures a time. The RAM 12 is a work area of the controller 11. The storage 13 is a storage region for storing a program and data.

The external storage medium reading unit 16 can read the stored program from the external storage medium 24 that stores the program such as DVD-ROM, CD-ROM, or cartridge ROM. For example, a program and data are stored in the external storage medium 24. The program and data are read out from the external storage medium 24 and are loaded to the RAM 12 by the external storage medium reading unit 16.

The controller 11 performs a process of reading out the program and data from the RAM 12. The controller 11 outputs a sound output instruction to the sound processor 14 and a drawing command to the graphics processor 15 by processing the program and data loaded to the RAM 12.

The sound processor 14 is connected to a sound output device 21 which is a speaker. When the controller 11 outputs the sound output instruction to the sound processor 14, the sound processor 14 outputs a sound signal to the sound output device 21.

The graphics processor 15 is connected to a display device 22. The display device 22 includes a display screen 23. When the controller 11 outputs the drawing command to the graphics processor 15, the graphics processor 15 develops an image to a frame memory (frame buffer) 19, and outputs a video signal for displaying the image on the display screen 23. The graphics processor 15 draws one image on a frame basis. One frame time of the image is, for example, 1/30 seconds. The graphics processor 15 is in charge of a part of an arithmetic process regarding the drawing performed only by the controller 11, and serves to distribute a load of the entire system.

An input unit 20 (for example, a mouse and a keyboard) may be connected to the interface unit 18. Input information input by the player from the input unit 20 is stored in the RAM 12, and the controller 11 executes various arithmetic processes based on the input information. Alternatively, a storage medium reading device may be connected to the interface unit 18, and the program and data may be read from the memory. The display device 22 including a touch panel may be the input unit 20.

The communication interface 17 can be connected to the communication network 2 in a wireless or wired manner, and can transmit and receive information to and from another computer apparatus via the communication network 2.

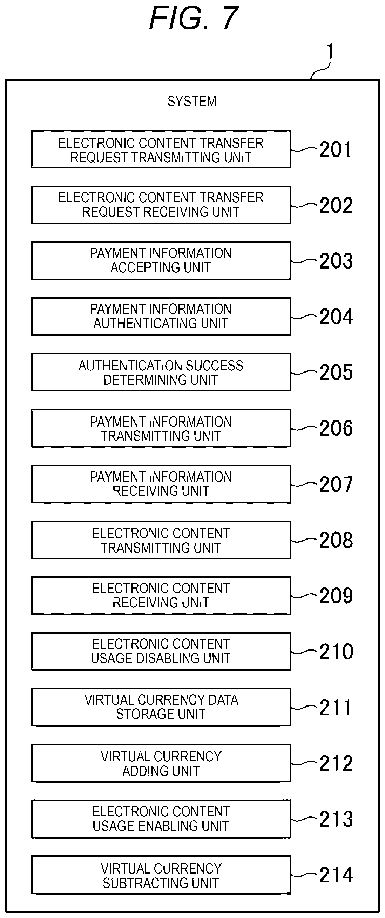

Next, functions of the system will be described. Fig. 7 is a block diagram showing a configuration of a system corresponding to at least one of the embodiments of the present invention. The system 1 includes at least an electronic content transfer request transmitting unit 201, an electronic content transfer request receiving unit 202, a payment information accepting unit 203, a payment information authenticating unit 204, an authentication success determining unit 205, a payment information transmitting unit 206, a payment information receiving unit 207, an electronic content transmitting unit 208, an electronic content receiving unit 209, an electronic content usage disabling unit 210, a virtual currency data storage unit 211, a virtual currency adding unit 212, an electronic content usage enabling unit 213, and a virtual currency subtracting unit 214.

The electronic content transfer request transmitting unit 201 has a function of transmitting a transfer request of the electronic content stored in the storage 13 of another client apparatus by an operation of the user. The electronic content transfer request receiving unit 202 has a function of receiving the electronic content transfer request transmitted by the electronic content transfer request transmitting unit 201.

The payment information accepting unit 203 has a function of accepting payment information regarding the payment of the fee of the electronic content by an operation of the user. The payment information authenticating unit 204 has a function of authenticating whether or not the payment information is valid information. The authentication success determining unit 205 has a function of determining whether or not the result authenticated by the payment information authenticating unit 204 succeeds. The payment information transmitting unit 206 has a function of transmitting the payment information accepted by the payment information accepting unit 203 to another client apparatus. The payment information receiving unit 207 has a function of receiving the payment information transmitted by the payment information transmitting unit 206.

The electronic content transmitting unit 208 has a function of transmitting the electronic content to another client apparatus. The electronic content receiving unit 209 has a function of receiving the electronic content transmitted from another client apparatus. The electronic content usage disabling unit 210 has a function of setting the electronic content available in the client apparatus to be in the unavailable state.

The virtual currency data storage unit 211 has a function of storing a virtual currency associated with the client apparatus or the user who operates the client apparatus. The virtual currency adding unit 212 has a function of adding the virtual currency corresponding to setting the electronic content to be in the unavailable state in the client apparatus to the virtual currency stored by the virtual currency data storage unit 211. The electronic content usage enabling unit 213 has a function of setting the electronic content set in the unavailable state in the client apparatus to be in the available state in another client apparatus. The virtual currency subtracting unit 214 has a function of subtracting the virtual currency corresponding to setting the electronic content to be in the available state in the client apparatus from the virtual currency stored by the virtual currency data storage unit 211.

The configuration of the client apparatus shown in Fig. 6 is not limited to the configuration of the first client apparatus 3, and can adopt the configuration of the second client apparatus 4 in a necessary range.

### Execution process

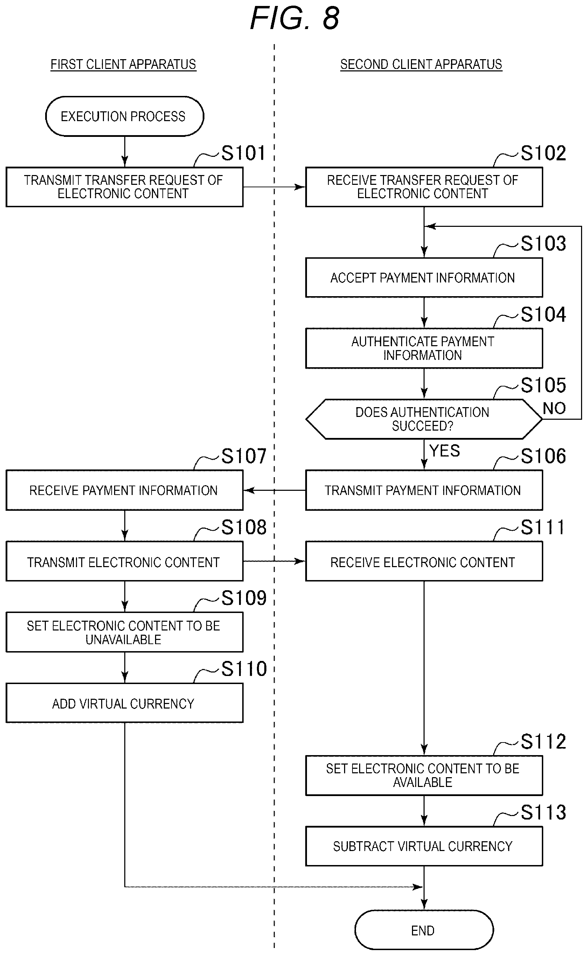

Next, an execution process according to the third embodiment of the present invention will be described. Fig. 8 is a flowchart of the execution process corresponding to at least one of the embodiments of the present invention.

The first client apparatus 3 accepts an operation of a first user who is the user of the first client apparatus, and transmits a request to transfer the electronic content to the second client apparatus 4 by the electronic content transfer request transmitting unit 201 (step S101). The second client apparatus 4 receives the request to transfer the electronic content which is transmitted in step S101 by the electronic content transfer request receiving unit 202 (step S102). The first client apparatus 3 and the second client apparatus 4 can be said being in the stet of agreement with each other regarding the transfer of the electronic content.

The second client apparatus 4 notifies a second user who is the user of the second client apparatus that the electronic content transfer request is received in a recognizable manner, and accepts the payment information for paying the fee of the electronic content by the payment information accepting unit 203 (step S103). The second client apparatus 4 authenticates whether or not the payment information accepted in step S103 is valid information by the payment information authenticating unit 204 (step S104). For example, the authentication process can be performed by using a card number, a holder name, an expiration date, and a security code of a credit card or using an authentication number of a gift card. Other known authentication processes may be performed.

The second client apparatus 4 determines whether or not the authentication succeeds by the authentication success determining unit 205 (step S105). When it is determined that the authentication fails (NO in step S105), a message for prompting the user to input the payment information again is displayed, and the payment information is accepted again in step S103.

When it is determined that the authentication succeeds (YES in step S105), the second client apparatus 4 transmits the payment information accepted by the payment information accepting unit 203 to the first client apparatus by the payment information transmitting unit 206 (step S106). The first client apparatus 3 receives the payment information transmitted by the payment information transmitting unit 206 by the payment information receiving unit 207 (step S107).

The first client apparatus 3 transmits the electronic content to the second client apparatus 4 by the electronic content transmitting unit 208 (step S108). The first client apparatus 3 sets the electronic content available in the first client apparatus 3 to be in the unavailable state by the electronic content usage disabling unit 210 (step S109).

### Disabling of usage of electronic content

For example, a method of restricting the access to the electronic content, locking an electronic content file, and deleting the electronic content from the first client apparatus is used as the disabling of the usage of the electronic content. That is, the disabling of the usage may mean that the electronic content set to be unavailable cannot be utilized in the first client apparatus until this electronic content is set to be available again.

Here, in order to prevent the electronic content from pretend to be deleted, a blockchain technology using a P2P technology may be used. For example, the system may guarantee that the electronic content is deleted from the first client apparatus by using a command signal for deleting the electronic content in the first client apparatus and a result for proving that there is no electronic content by searching a storage of the first client apparatus after the deletion of the electronic content as a set and storing this set in a computer apparatus of a manager of a blockchain network called a minor.

The description will be made by referring back to the flowchart of Fig. 8. The first client apparatus 3 adds the virtual currency corresponding to setting the electronic content to be unavailable in the first client apparatus 3 to the virtual currency stored in the first client apparatus 3 by the virtual currency adding unit 212 (step S 110), and terminates the process in the first client apparatus 3. For example, the virtual currency may be paid as a fee for the electronic content such as transaction media and point, and is not limited to the currency.

Meanwhile, the second client apparatus 4 receives the electronic content transmitted by the electronic content transmitting unit 208 in step S108 (step Sill). The second client apparatus 4 sets the electronic content which is set in the unavailable state in the first client apparatus 3 and is received in step Sill to be in the available state in the second client apparatus 4 by the electronic content usage enabling unit 213 (step S112).

A method of permitting the access to the electronic content and unlocking the electronic content file is used as the enabling of the usage of the electronic content. The electronic content set to be available can be used in the client apparatus. The electronic content set to be available may be limited to the electronic content that may be set to be unavailable. That is, the system that handles only the electronic content capable of being set to be unavailable may be used.

The second client apparatus 4 subtracts the virtual currency corresponding to setting the electronic content to be in the available state in the second client apparatus 4 from the virtual currency stored in the second client apparatus 4 by the virtual currency subtracting unit 214 (step S 113), and terminates the process.

In the third embodiment, it is preferable that a virtual currency corresponding to setting a new electronic content to be in the available state in the first client apparatus is equal to or greater than the sum of a virtual currency corresponding to setting the new electronic content to be in the unavailable state in the first client apparatus and a virtual currency corresponding to setting the new electronic content to be in the available state in the second client apparatus. With such a configuration, the second user who uses the second client apparatus can obtain economic benefits, and it is possible to activate transactions between the first client apparatus and the second client apparatus.

Although it has been described in the third embodiment that the authentication procedure of the payment information is performed in the second client apparatus, the present invention is not limited thereto. For example, the authentication process is not performed in the second client apparatus, and may be performed in the first client apparatus. In this case, information indicating that the authentication succeeds may be transmitted from the first client apparatus to the second client apparatus, and the transfer transaction of the electronic content may be established. Alternatively, the authentication of the payment information is performed not in the first client apparatus or the second client apparatus but in an external apparatus, and the authentication result may be obtained.

Although it has been described in the third embodiment that the authentication process of the payment information is performed by using a credit card or a gift card, the present invention is not limited thereto. For example, the authentication may be performed by mailing an application, transmitting an application by FAX, inputting application information through access to a Web site, or applying through bank remittance.

Although it has been described in the third embodiment that the electronic contents are transmitted and received at once, the present invention is not limited thereto. That is, a part of the electronic contents, for example, header information may be previously downloaded, and when the authentication of the payment information is completed, the electronic contents may be completely downloaded. Alternatively, before the authentication is completed, the electronic content which is in the unavailable state may be downloaded.

Although it has been described in the third embodiment that the client apparatus includes the virtual currency data storage unit, the present invention is not limited thereto. Information regarding the virtual currency may not be stored in a storage within the client apparatus, and may be obtained by inquiring to an external apparatus.

In the third embodiment, it is preferable that the electronic content is an electronic book, a game, audio, and/or video.

As one aspect of the third embodiment, it is possible to provide a new system for utilizing the electronic content.

As one aspect of the third embodiment, when the usage enabling information received by the second client apparatus is the usage enabling information corresponding to the electronic content as the target for usage, it is possible to appropriately manage the electronic content by setting the electronic content to be available in the second client apparatus.

As one aspect of the third embodiment, it is possible to activate the transactions by using the virtual currency as a fee regarding the transfer of the electronic content between the first client apparatus and the second client apparatus.

In the third embodiment, the "client apparatus", the "electronic content", the "usage", the "available", and the "system" can adopt the contents described in the first embodiment in a necessary range.

In the third embodiment, the "billing process" and the "usage enabling information" can adopt the contents described in the second embodiment in a necessary range.

In the third embodiment, for example, the "virtual currency" is paid as the fee of the electronic content such as transaction medium or point, and is not limited to the currency. For example, the "transfer" means that data of no object such as the electronic content moves to another client apparatus, and the electronic content may be transferred for a fee (that is, referred to as purchasing or buying and selling in a transaction with payment) or may be transferred free of charge when the electronic content is transferred. The transfer is a concept including a temporary lending irrespective of whether or not the electronic content is transferred together with an ownership of the electronic content.

### Fourth embodiment

Next, an outline of a fourth embodiment of the present invention will be described. In the following, an electronic content utilization system that includes a first client apparatus, a second client apparatus, and a management server apparatus will be described as an example of a fourth embodiment. In the fourth embodiment, the system in which the first client apparatus and the second client apparatus are connected so as to deliver the electronic file to each other through the management server apparatus is used. Electronic contents which are obtained by the user through legitimate means and are provided by an electronic content provider are stored in the first client apparatus.

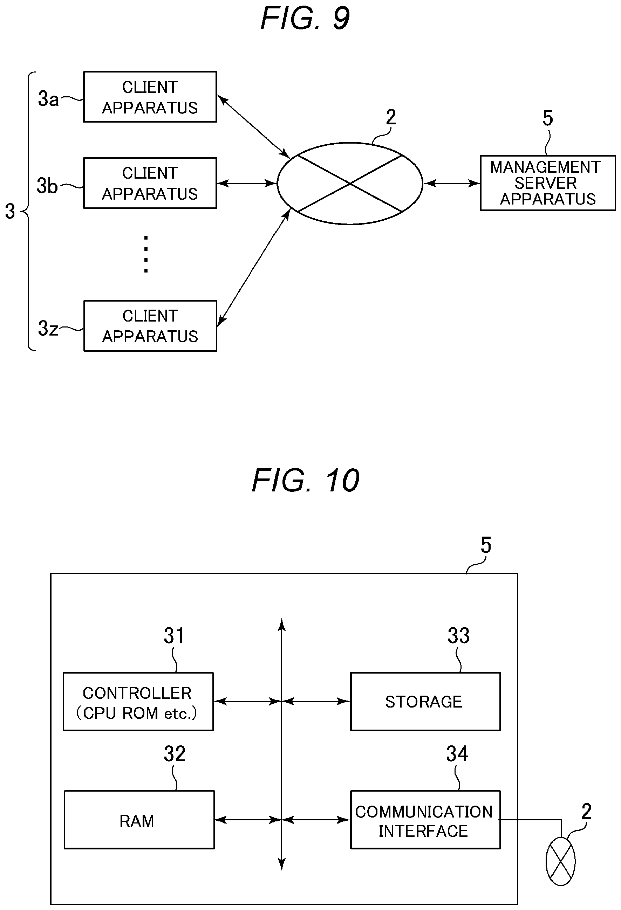

Fig. 9 is a block diagram showing a configuration of a system corresponding to at least one of the embodiments of the present invention. As shown in this diagram, the system includes a plurality of client apparatuses 3 (client apparatuses 3a, 3b, ···, and 3z) operated by a plurality of players (users A, B, ···, and Z), a communication network 2, and a management server apparatus 5. The client apparatuses 3 are connected to the management server apparatus 5 through the communication network 2. The client apparatuses 3 and the management server apparatus 5 may not be constantly connected, or may be connected as needed.

Fig. 10 is a block diagram showing a configuration of a management server apparatus corresponding to at least one of the embodiments of the present invention. The management server apparatus 5 includes a controller 31, a RAM 32, a storage 33, and a communication interface 34, and these units are connected through an internal bus.

The controller 31 includes a CPU and a ROM, and executes a program stored in the storage 33 and controls the management server apparatus 5. The controller 31 includes an internal timer that measures a time. The RAM 32 is a work area of the controller 31. The storage 33 is a storage region for storing a program and data. The controller 31 reads out the program and data from the RAM 32, and performs a program execution process based on request information received from the client apparatus. The communication interface 34 can be connected to the communication network 2 in a wireless or wired manner, and can receive the data via the communication network 2. The data received through the communication interface 34 is loaded to the RAM 32, and an arithmetic process is performed by the controller 31.

Configurations of the first client apparatus 3 and the second client apparatus 4 according to the fourth embodiment of the present invention can adopt the contents described in Fig. 6 in a necessary range.

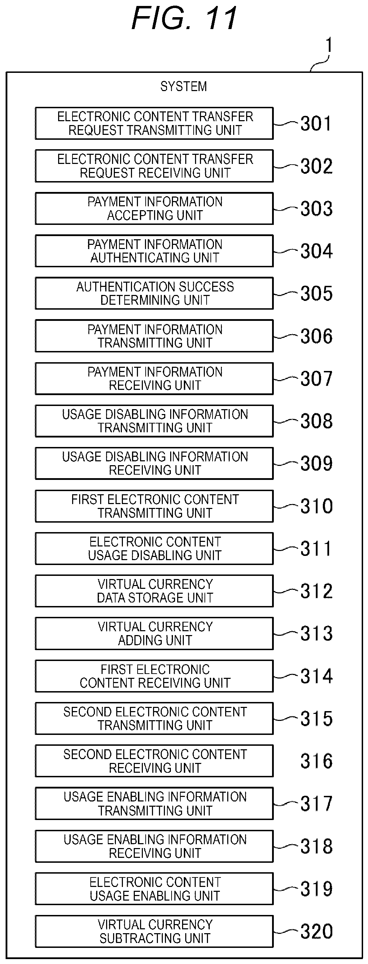

Next, functions of the system will be described. Fig. 11 is a block diagram showing a configuration of a system corresponding to at least one of the embodiments of the present invention. A system 1 includes at least an electronic content transfer request transmitting unit 301, an electronic content transfer request receiving unit 302, a payment information accepting unit 303, a payment information authenticating unit 304, an authentication success determining unit 305, a payment information transmitting unit 306, a payment information receiving unit 307, a usage disabling information transmitting unit 308, a usage disabling information receiving unit 309, a first electronic content transmitting unit 310, an electronic content usage disabling unit 311, a virtual currency data storage unit 312, a virtual currency adding unit 313, a first electronic content receiving unit 314, a second electronic content transmitting unit 315, a second electronic content receiving unit 316, a usage enabling information transmitting unit 317, a usage enabling information receiving unit 318, an electronic content usage enabling unit 319, and a virtual currency subtracting unit 320.

The electronic content transfer request transmitting unit 301 has a function of transmitting a transfer request of the electronic content stored in the storage 33 of another client apparatus by an operation of the user. The electronic content transfer request receiving unit 302 has a function of receiving the electronic content transfer request transmitted by the electronic content transfer request transmitting unit 301.

The payment information accepting unit 303 has a function of accepting payment information regarding the payment of the fee of the electronic content by an operation of the user. The payment information authenticating unit 304 has a function of authenticating whether or not the payment information is valid information. The authentication success determining unit 305 has a function of determining whether or not the result authenticated by the payment information authenticating unit 304 succeeds. The payment information transmitting unit 306 has a function of transmitting the payment information accepted by the payment information accepting unit 303 to another apparatus. The payment information receiving unit 307 has a function of receiving the payment information transmitted by the payment information transmitting unit 306.

The usage disabling information transmitting unit 308 has a function of transmitting the usage disabling information for setting the electronic content to be in the unavailable state in the client apparatus to the client apparatus. The usage disabling information receiving unit 309 has a function of receiving the usage disabling information transmitted by the usage disabling information transmitting unit 308.

The first electronic content transmitting unit 310 has a function of transmitting the electronic content to another apparatus. The electronic content usage disabling unit 311 has a function of setting the electronic content available in the client apparatus to be in the unavailable state.

The virtual currency data storage unit 312 has a function of storing a virtual currency associated with the client apparatus or the user who operates the client apparatus. The virtual currency adding unit 313 has a function of adding the virtual currency corresponding to setting the electronic content to be in the unavailable state in the client apparatus to the virtual currency stored by the virtual currency data storage unit 312.

The first electronic content receiving unit 314 has a function of receiving the electronic content transmitted from another apparatus. The second electronic content transmitting unit 315 has a function of transmitting the electronic content to another apparatus. The second electronic content receiving unit 316 has a function of receiving the electronic content transmitted from another apparatus.

The usage enabling information transmitting unit 317 has a function of transmitting usage enabling information for setting the electronic content in the second client apparatus to be in the available state to the second client apparatus when a billing process is performed by the second user who operates the second client apparatus. The usage enabling information receiving unit 318 has a function of receiving the usage enabling information transmitted by the usage enabling information transmitting unit 317.

The electronic content usage enabling unit 319 has a function of setting the electronic content set in the unavailable state in the client apparatus to be in the available state in another client apparatus. The virtual currency subtracting unit 320 has a function of subtracting the virtual currency corresponding to setting the electronic content to be in the available state in the client apparatus from the virtual currency stored by the virtual currency data storage unit 312.

### Execution process

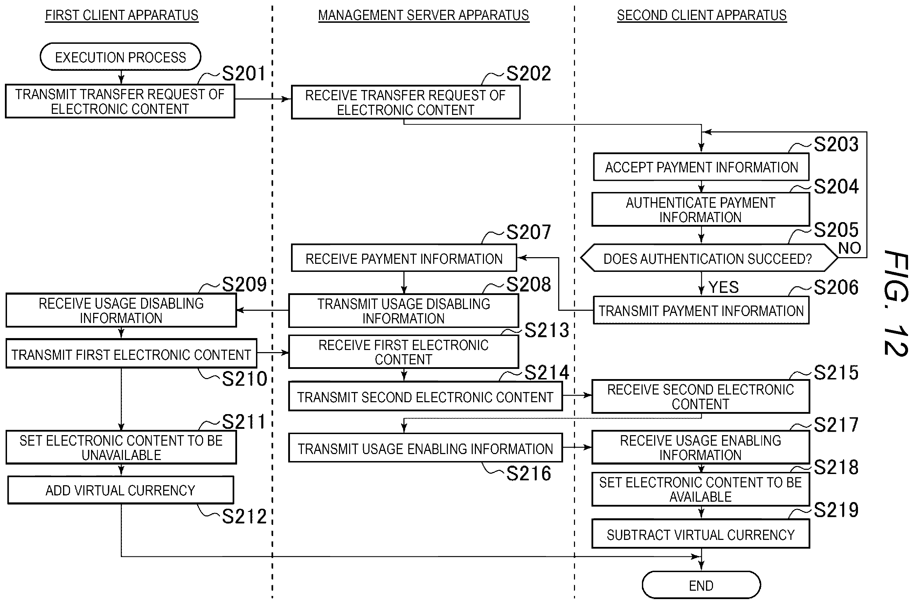

Next, an execution process according to the fourth embodiment of the present invention will be described. Fig. 12 is a flowchart of the execution process corresponding to at least one of the embodiments of the present invention.

The first client apparatus 3 accepts an operation of a first user who is the user of the first client apparatus, and transmits a request to transfer the electronic content to the second client apparatus 4 by the electronic content transfer request transmitting unit 301 (step S201). The management server apparatus 5 receives the request to transfer the electronic content which is transmitted in step S201 by the electronic content transfer request receiving unit 302 (step S202). The management server apparatus 5 provides information regarding the electronic content for which the transfer to the second client apparatus 4 is requested so as to be viewable, and waits for authentication information of the payment information. At this time, the first client apparatus 3 and the second client apparatus 4 can be said being in the stet of agreement with each other regarding the transfer of the electronic content.

The second client apparatus 4 accepts, among electronic contents to be requested for the transfer the designation of an electronic content as a target to be transferred, and accepts the payment information for paying the fee of the electronic content by the payment information accepting unit 303 (step S203). The second client apparatus 4 authenticates whether or not the payment information accepted in step S203 is valid information by the payment information authenticating unit 304 (step S204). For example, the authentication process can be performed by using a card number, a holder name, an expiration date, and a security code of a credit card or using an authentication number of a gift card. Other known authentication processes may be performed.

The second client apparatus 4 determines whether or not the authentication succeeds by the authentication success determining unit 305 (step S205). When it is determined that the authentication fails (NO in step S205), a message for prompting the user to input the payment information again is displayed, and the payment information is accepted again in step S203.

When it is determined that the authentication succeeds (YES in step S205), the second client apparatus 4 transmits the payment information accepted by the payment information accepting unit 303 to the management server apparatus 5 by the payment information transmitting unit 306 (step S206).

The management server apparatus 5 receives the payment information transmitted by the payment information transmitting unit 306 by the payment information receiving unit 307 (step S207). The management server apparatus 5 transmits the usage disabling information for setting the electronic content to be in the unavailable state in the first client apparatus 3 to the first client apparatus by the usage disabling information transmitting unit 308 (step S208).

The first client apparatus 3 receives the usage disabling information transmitted by the usage disabling information transmitting unit 308 by the usage disabling information receiving unit 309 (step S209). The first client apparatus 3 transmits the electronic content to the management server apparatus 5 by the first electronic content transmitting unit 310.

The first client apparatus 3 sets the electronic content set to be available in the first client apparatus 3 to be in the unavailable state by the electronic content usage disabling unit 311 (step S211). The disabling of the usage of the electronic content can adopt the contents related to the disabling of the usage of the electronic content described in the third embodiment in a necessary range.

The first client apparatus 3 adds the virtual currency corresponding to setting the electronic content to be in the unavailable state in the first client apparatus 3 to the virtual currency stored in the first client apparatus 3 by the virtual currency adding unit 313 (step S212). For example, the virtual currency may be paid as a fee for the electronic content such as transaction media and point, and is not limited to the currency.

Meanwhile, when the electronic content is transmitted in step S210, the management server apparatus 5 receives the electronic content transmitted from the first client apparatus by the first electronic content receiving unit 314 (step S213). The management server apparatus 5 transmits the electronic content to the second client apparatus by the second electronic content transmitting unit 315 (step S214).

The second client apparatus 4 receives the electronic content transmitted from the management server apparatus 5 by the second electronic content transmitting unit 315 (step S215). The management server apparatus 5 transmits the usage enabling information for setting the electronic content in the second client apparatus to be in the available state to the second client apparatus when a billing process is performed by the second user who operates the second client apparatus (step S216). A usage enabling information transmitting process may be performed at the same timing as a second electronic content transmitting process.

The second client apparatus 4 receives the usage enabling information transmitted in step S216 by the usage enabling information receiving unit 318 (step S217). The second client apparatus 4 sets the electronic content set in the unavailable state in the first client apparatus 3 to be in the available state in the second client apparatus 4 by the electronic content usage enabling unit 319 (step S218).

A method of permitting the access to the electronic content and unlocking the electronic content file is used as the enabling of the usage of the electronic content. The electronic content set to be available can be used in the client apparatus. The electronic content set to be available may be limited to the electronic content that may be set to be unavailable. That is, the system that handles only the electronic content capable of being set to be unavailable may be used.

The second client apparatus 4 subtracts the virtual currency corresponding to setting the electronic content to be in the available state in the second client apparatus 4 from the virtual currency stored in the second client apparatus 4 by the virtual currency subtracting unit 320 (step S219), and terminates the process.

In the fourth embodiment, it is preferable that a virtual currency corresponding to setting a new electronic content to be in the available state in the first client apparatus is equal to or greater than the sum of a virtual currency corresponding to setting the new electronic content to be in the unavailable state in the first client apparatus and a virtual currency corresponding to setting the new electronic content to be in the available state in the second client apparatus. With such a configuration, the second user who uses the second client apparatus can obtain economic benefits, and it is possible to activate transactions between the first client apparatus and the second client apparatus.

Although it has been described in the fourth embodiment that the authentication of the payment information is performed in the second client apparatus, the present invention is not limited thereto. For example, the authentication process is not performed in the second client apparatus, and may be performed in the management server apparatus 5. In this case, information indicating that the authentication succeeds may be transmitted from the management server apparatus 5 to the first client apparatus, and the transfer transaction of the electronic content may be established. Alternatively, the authentication of the payment information is performed not in the first client apparatus, the second client apparatus, or the management server apparatus 5 but in an external apparatus through the management server apparatus 5, and only the authentication result may be obtained.

Although it has been described in the fourth embodiment that the authentication process of the payment information is performed by using a credit card or a gift card, the present invention is not limited thereto. For example, the authentication may be performed by mailing an application, transmitting an application by FAX, inputting application information through access to a Web site, or applying through bank remittance.

Although it has been described in the fourth embodiment that the electronic contents are transmitted and received at once, the present invention is not limited thereto. That is, for example, a part of the electronic contents, for example, header information may be previously downloaded, and when the authentication of the payment information is completed, the electronic contents may be completely downloaded. Alternatively, before the authentication is completed, the electronic content which is in the unavailable state may be downloaded.

Although it has been described in the fourth embodiment that the client apparatus includes the virtual currency data storage unit, the present invention is not limited thereto. Information regarding the virtual currency may not be stored in a storage within the client apparatus, and may be obtained by inquiring to an external apparatus.

Although it has been described in the fourth embodiment that the electronic content is stored in the first client apparatus, the present invention is not limited thereto. For example, the electronic content may be stored in the management server apparatus 5, and the first client apparatus and the second client apparatus may access to the management server apparatus. As a result, the electronic content may be set to be available. That is, these apparatuses may be connected through communication, and a streaming technology for utilizing the electronic content may be used. In this case, since the management server apparatus manages the availability of the electronic content, it is possible to suppress a communication load with which the electronic content is transmitted and received, and it is possible to protect copyright on the electronic content.

In the fourth embodiment, it is preferable that the electronic content is an electronic book, a game, audio, and/or video.

As one aspect of the fourth embodiment, it is possible to provide a new system for utilizing the electronic content.

As one aspect of the fourth embodiment, when the usage enabling information received by the second client apparatus is the usage enabling information corresponding to the electronic content as the target for usage, it is possible to appropriately manage the electronic content by setting the electronic content to be available in the second client apparatus.

As one aspect of the fourth embodiment, it is possible to activate the transactions by using the virtual currency as a fee regarding the transfer of the electronic content between the first client apparatus and the second client apparatus.

In the fourth embodiment, the "client apparatus", the "electronic content", the "usage", the "available", and the "system" can adopt the contents described in the first embodiment in a necessary range.

In the fourth embodiment, the "billing process" and the "usage enabling information" can adopt the contents described in the second embodiment in a necessary range.

In the fourth embodiment, the "virtual currency" and the "transfer" can adopt the contents described in the third embodiment in a necessary range.

### Fifth embodiment

Next, an outline of a fifth embodiment of the present invention will be described. In the following, a program causing a first client apparatus to function in an electronic content utilization system that includes the first client apparatus, and a second client apparatus, and includes a usage enabler that sets an electronic content set in an unavailable state in the first client apparatus to be in an available state in the second client apparatus, and in which the usage enabler sets the electronic content to be in the available state in the second client apparatus when a predetermined condition for usage is satisfied, will be described as an example of the fifth embodiment.

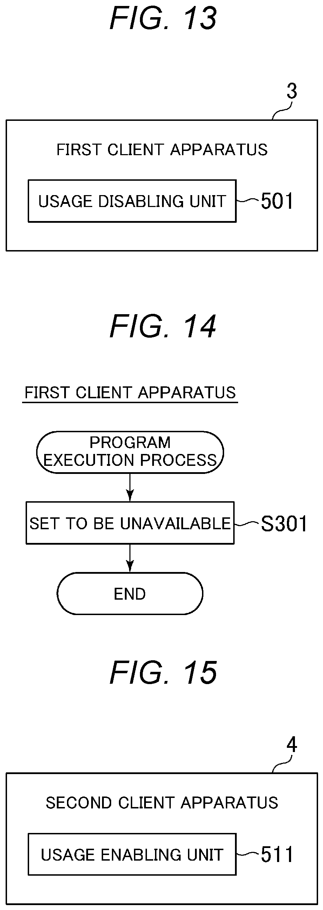

Fig. 13 is a block diagram showing a configuration of a client apparatus corresponding to at least one of the embodiments of the present invention. A first client apparatus 3 includes at least a usage disabling unit 501. The usage disabling unit 501 has a function of setting the electronic content available in the client apparatus to be in the unavailable state.

Next, a program execution process according to the fifth embodiment of the present invention will be described. Fig. 14 is a flowchart of the program execution process corresponding to at least one of the embodiments of the present invention.

The first client apparatus 3 sets the electronic content available in the first client apparatus 3 to be in the unavailable state (step S301), and terminates the process.

As one aspect of the fifth embodiment, it is possible to provide a new system for utilizing the electronic content.

In the fifth embodiment, the "client apparatus", the "electronic content", the "usage", the "available", and the "system" can adopt the contents described in the first embodiment in a necessary range.

### Sixth embodiment

Next, an outline of a sixth embodiment of the present invention will be described. In the following, a program causing a second client apparatus to function in an electronic content utilization system that includes a first client apparatus, the second client apparatus, and includes a usage disabler that sets an electronic content available in the first client apparatus to be in an unavailable state will be described as an example of the sixth embodiment.

Fig. 15 is a block diagram showing a configuration of a client apparatus corresponding to at least one of the embodiments of the present invention. A second client apparatus 4 includes at least a usage enabling unit 511. The usage enabling unit 511 has a function of setting the electronic content set in the unavailable state in the first client apparatus to be in an available state in the second client apparatus. The usage enabling unit 511 sets the electronic content to be in the available state in the second client apparatus when a predetermined condition for usage is satisfied.

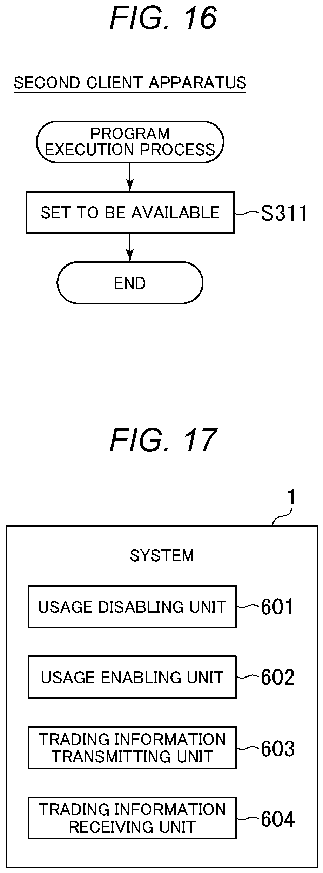

Next, a program execution process according to the sixth embodiment of the present invention will be described. Fig. 16 is a flowchart of the program execution process corresponding to at least one of the embodiments of the present invention.

The second client apparatus 4 sets the electronic content set in the unavailable state in the first client apparatus 3 to be in the available state by the second client apparatus 4 (step S311), and terminates the process. The second client apparatus 4 sets the electronic content to be in the available state in the second client apparatus when a predetermined condition for usage is satisfied.

As one aspect of the sixth embodiment, it is possible to provide a new system for utilizing the electronic content.

In the sixth embodiment, the "client apparatus", the "electronic content", the "usage", the "available", and the "system" can adopt the contents described in the first embodiment in a necessary range.

### Seventh embodiment

An outline of a seventh embodiment of the present invention will be described. In the following, an electronic content utilization system that includes a first client apparatus, a second client apparatus, a mediation server apparatus capable of being connected to the first client apparatus and the second client apparatus through communication, and a management server apparatus capable of being connected to the mediation server apparatus through communication will be described as an example of the seventh embodiment.

Fig. 17 is a block diagram showing a configuration of a system corresponding to at least one of the embodiments of the present invention. A system 1 includes at least a usage disabling unit 601, a usage enabling unit 602, a trading information transmitting unit 603, and a trading information receiving unit 604.

When a selling request of the electronic content available in the first client apparatus is received by the mediation server apparatus from the first client apparatus and/or a buying request of the electronic content is received by the mediation server apparatus from the second client apparatus, the usage disabling unit 601 has a function of setting the electronic content to be in the unavailable state in the first client apparatus. When the buying request of the electronic content is received by the mediation server apparatus from the second client apparatus, the usage enabling unit 602 has a function of setting the electronic content set in the unavailable state in the first client apparatus to be in the available state in the second client apparatus.

The trading information transmitting unit 603 has a function of causing the mediation server apparatus to transmit trading information regarding buying of the electronic content in the first client apparatus and/or trading information regarding the selling of the electronic content in the second client apparatus to the management server apparatus. The trading information receiving unit 604 has a function of causing the management server apparatus to receive the trading information from the mediation server apparatus.

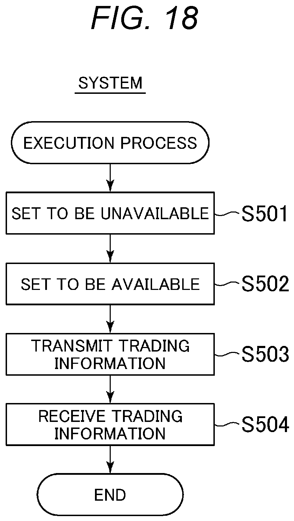

Next, an execution process of utilizing the electronic content according to the seventh embodiment of the present invention will be described. Fig. 18 is a flowchart of the execution process corresponding to at least one of the embodiments of the present invention.

When the selling request of the electronic content available in the first client apparatus is received by the mediation server apparatus from the first client apparatus and/or the buying request of the electronic content is received by the mediation server apparatus from the second client apparatus, the system 1 sets the electronic content to be in the unavailable state in the first client apparatus by the usage disabling unit 601 (step S501). Next, when the buying request of the electronic content is received by the mediation server apparatus from the second client apparatus by the usage enabling unit 602, the system 1 sets the electronic content set in the unavailable state in the first client apparatus to be in the available state in the second client apparatus (step S502).

In the system 1, the mediation server apparatus transmits trading information regarding the selling of the electronic content in the first client apparatus and/or the buying of the electronic content in the second client apparatus to the management server apparatus (step S503). In the system 1, the management server apparatus receives the trading information from the mediation server apparatus (step S504), and terminates the process.

As one aspect of the seventh embodiment, it is possible to provide a new system for utilizing the electronic content.

In the seventh embodiment, the "client apparatus", the "electronic content", the "usage", the "available", and the "system" can adopt the contents described in the first embodiment in a necessary range.

In the seventh embodiment, the "mediation server apparatus" is, for example, a server apparatus that is capable of being connected to the first client apparatus and the second client apparatus through communication, and an apparatus that performs processes according to requests from the first client apparatus and the second client apparatus. The "management server apparatus" is, for example, a server apparatus that is capable of being connected to the mediation server apparatus through communication, and is an apparatus that performs processes according to requests from the mediation server apparatus.

### Eighth embodiment

An outline of an eighth embodiment of the present invention will be described. In the following, an electronic content utilization system that includes a first client apparatus, a second client apparatus, a mediation server apparatus that is capable of being connected to the first client apparatus and the second client apparatus through communication, and a management server apparatus that is capable of being connected to the mediation server apparatus through communication is used as the eighth embodiment. Here, electronic contents which are obtained by the user through legitimate means and are provided by an electronic content provider are stored in the first client apparatus.

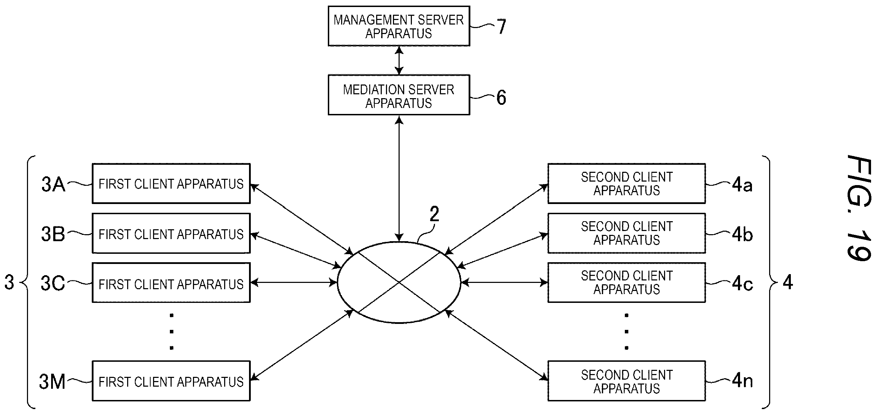

Fig. 19 is a block diagram showing a configuration of a system corresponding to at least one of the embodiments of the present invention. As shown in this diagram, the system includes a plurality of first client apparatuses 3 (first client apparatuses 3A, 3B, 3C, ···, and 3M) operated by a plurality of players (users A, B, C, ···, and M), a communication network 2, second client apparatuses 4 (second client apparatuses 4a, 4b, 4c, ···, and 4n) operated by a plurality of players (users a, b, c, ···, and n), a mediation server apparatus 6, and a management server apparatus 7. The first client apparatuses 3 and the second client apparatuses 4 are connected to the mediation server apparatus 6 via the communication network 2. The mediation server apparatus 6 is connected to the management server apparatus 7 via the communication network 2. The first client apparatuses 3, the second client apparatuses 4, and the mediation server apparatus 6 may not be constantly connected, or may be connected as needed. The mediation server apparatus 6 and the management server apparatus 7 may not be constantly connected, or may be connected as needed.

Configurations of the first client apparatus and the second client apparatus according to the eighth embodiment of the present invention can adopt the contents described in Fig. 6 in a necessary range. Configurations of the mediation server apparatus and the management server apparatus according to the eighth embodiment of the present invention can adopt the contents described in Fig. 10 in a necessary range.

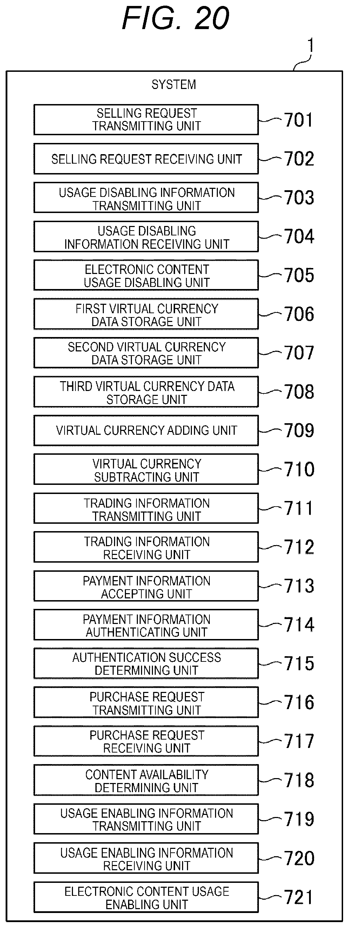

Next, functions of the system will be described. Fig. 20 is a block diagram showing a configuration of a system corresponding to at least one of the embodiments of the present invention. The system 1 includes at least a selling request transmitting unit 701, a selling request receiving unit 702, a usage disabling information transmitting unit 703, a usage disabling information receiving unit 704, an electronic content usage disabling unit 705, a first virtual currency data storage unit 706, a second virtual currency data storage unit 707, a third virtual currency data storage unit 708, a virtual currency adding unit 709, a virtual currency subtracting unit 710, a trading information transmitting unit 711, a trading information receiving unit 712, a payment information accepting unit 713, a payment information authenticating unit 714, an authentication success determining unit 715, a purchase request transmitting unit 716, a purchase request receiving unit 717, a content availability determining unit 718, a usage enabling information transmitting unit 719, a usage enabling information receiving unit 720, and an electronic content usage enabling unit 721.

The selling request transmitting unit 701 has a function of transmitting a selling request of the electronic content available in the first client apparatus. The selling request receiving unit 702 has a function of receiving the selling request transmitted by the selling request transmitting unit 701.

When the selling request of the electronic content available in the first client apparatus is received by the mediation server apparatus from the first client apparatus and/or a purchase (buying) request of the electronic content is received by the mediation server apparatus from the second client apparatus, the usage disabling information transmitting unit 703 has a function of transmitting the usage disabling information for setting the electronic content to be in the unavailable state in the first client apparatus. The usage disabling information receiving unit 704 has a function of receiving the usage disabling information transmitted by the usage disabling information transmitting unit 703.

The electronic content usage disabling unit 705 has a function of setting the electronic content to be in the unavailable state in the first client apparatus, when the selling request of the electronic content available in the first client apparatus is received by the mediation server apparatus from the first client apparatus and/or the purchase (buying) request of the electronic content is received by the mediation server apparatus from the second client apparatus.

The first virtual currency data storage unit 706 has a function of storing the virtual currency associated with the first client apparatus or the first user who operates the first client apparatus. The second virtual currency data storage unit 707 has a function of storing the virtual currency associated with the second client apparatus or the second user who operates the second client apparatus. The third virtual currency data storage unit 708 has a function of storing the virtual currency associated with the mediation server apparatus.

The virtual currency adding unit 709 has a function of adding the virtual currency corresponding to setting the electronic content to be in the unavailable state to the virtual currency stored by the first virtual currency data storage unit 706 or adding the virtual currency corresponding to setting the electronic content to be in the available state to the virtual currency stored by the third virtual currency data storage unit 708. The virtual currency subtracting unit 710 has a function of subtracting the virtual currency corresponding to setting the electronic content to be in the unavailable state from the virtual currency stored by the third virtual currency data storage unit 708 or subtracting the virtual currency corresponding to setting the electronic content to be in the available state from the virtual currency stored by the second virtual currency data storage unit 707.

The trading information transmitting unit 711 has a function of causing the mediation server apparatus 6 to transmit the trading information regarding the selling of the electronic content in the first client apparatus and/or the purchase (buying) of the electronic content in the second client apparatus to the management server apparatus 7. The trading information receiving unit 712 has a function of causing the management server apparatus 7 to receive the trading information transmitted from the mediation server apparatus 6.

The payment information accepting unit 713 has a function of accepting payment information regarding the payment of the fee of the electronic content by an operation of the user. The payment information authenticating unit 714 has a function of authenticating whether or not the payment information is valid information. The authentication success determining unit 715 has a function of determining whether or not the result authenticated by the payment information authenticating unit 714 succeeds. The purchase request transmitting unit 716 has a function of transmitting the purchase (buying) request of the electronic content to the mediation server apparatus from the second client apparatus. The purchase request receiving unit 717 has a function of receiving the purchase (buying) request transmitted by the purchase request transmitting unit 716.

The content availability determining unit 718 has a function of determining whether or not the electronic content is available in the first client apparatus. The usage enabling information transmitting unit 719 has a function of transmitting the usage enabling information for setting the electronic content to be in the available state in the second client apparatus to the second client apparatus. The usage enabling information receiving unit 720 has a function of receiving the usage enabling information transmitted by the usage enabling information transmitting unit 719. When the purchase (buying) request of the electronic content is received by the mediation server apparatus from the second client apparatus, the electronic content usage enabling unit 721 has a function of setting the electronic content set in the unavailable state in the first client apparatus to be in the available state in the second client apparatus.

An execution process of the system according to the eighth embodiment of the present invention will be described. In the system according to the eighth embodiment of the present invention, a selling execution process of selling the electronic content and a purchase execution process of purchasing the electronic content are independently controlled.

### Selling execution process

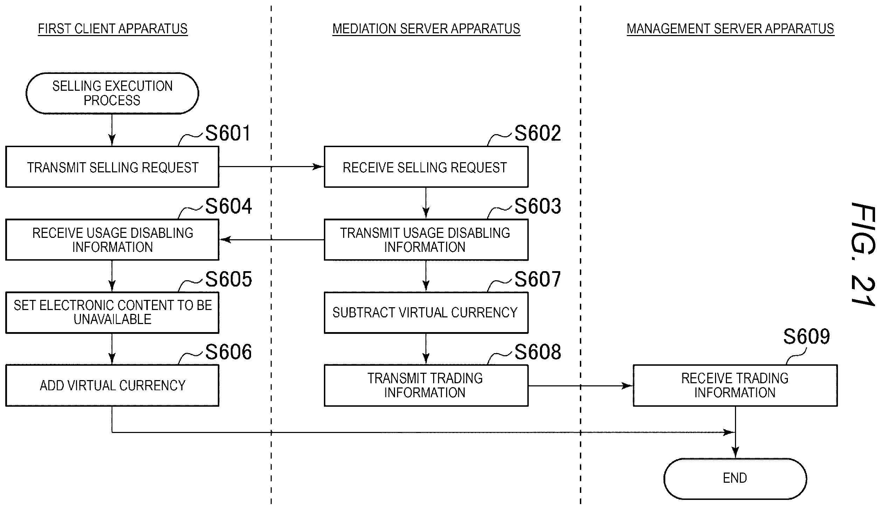

Next, the selling execution process of the electronic content according to the eighth embodiment of the present invention will be described. Fig. 21 is a flowchart of the selling execution process corresponding to at least one of the embodiments of the present invention. In the description of the following embodiments, electronic contents which are obtained by the user through legitimate means and are provided by an electronic content provider are stored in the first client apparatus.

The first client apparatus 3 accepts the operation of the first user who is the user of the first client apparatus, and transmits the selling request of the electronic content available in the first client apparatus by the selling request transmitting unit 701 of the electronic content (step S601). The mediation server apparatus 6 receives the request for selling the electronic content transmitted in step S601 by the selling request receiving unit 702 (step S602).

The mediation server apparatus 6 transmits the usage disabling information for setting the electronic content to be in the unavailable state in the first client apparatus by the usage disabling information transmitting unit 703 (step S603). The first client apparatus 3 receives the usage disabling information transmitted by the usage disabling information transmitting unit 703 by the usage disabling information receiving unit 704 (step S604).

The first client apparatus 3 sets the electronic content available in the first client apparatus 3 to be in the unavailable state by the electronic content usage disabling unit 705 (step S605). For example, the electronic content stored in the first client apparatus 3 is set to be in the unavailable state by being deleted. The disabling of the usage of the electronic content can adopt the contents described in the third embodiment in a necessary range.

The first client apparatus 3 adds the virtual currency corresponding to setting the electronic content to be in the unavailable state in the first client apparatus 3 to the virtual currency stored by the first virtual currency data storage unit 706 by the virtual currency adding unit 709 (step S606), and terminates the process in the first client apparatus 3. For example, the virtual currency may be paid as a fee for the electronic content such as transaction media and point, and is not limited to the currency.

Meanwhile, when the electronic content is transmitted in step S603, the mediation server apparatus 6 subtracts the virtual currency corresponding to setting the electronic content to be in the unavailable state from the virtual currency stored by the third virtual currency data storage unit 708 by the virtual currency subtracting unit 710 (step S607).

The mediation server apparatus 6 transmits the trading information regarding the selling of the electronic content in the first client apparatus to the management server apparatus 7 by the trading information transmitting unit 711 (step S608). The management server apparatus 7 receives the trading information transmitted from the mediation server apparatus 6 by the trading information receiving unit 712 (step S609), and terminates the process.

### Purchase execution process

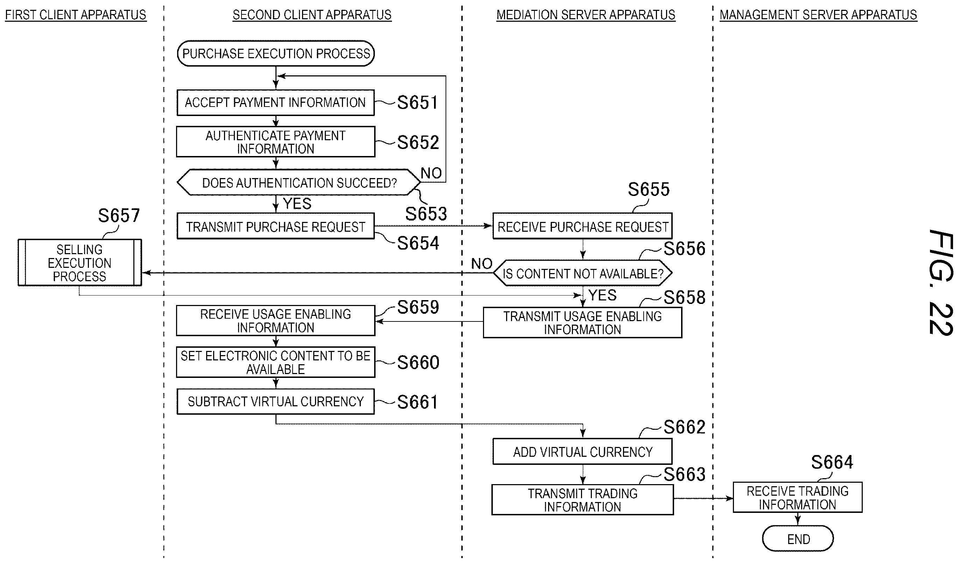

Next, the purchase (buying) execution process of the electronic content according to the eighth embodiment of the present invention will be described. Fig. 22 is a flowchart of the purchase (buying) execution process corresponding to at least one of the embodiments of the present invention. Here, the description will be made on an assumption that the electronic content is stored in the first client apparatus.

The second user who operates the second client apparatus designates any electronic content from a list of the electronic contents displayed so as to be recognizable from the mediation server apparatus 6. The second client apparatus 4 accepts the payment information regarding the payment of the fee of the electronic content designated by the operation of the user by the payment information accepting unit 713 (step S651). The second client apparatus 4 authenticates whether or not the payment information is valid information by the payment information authenticating unit 714 (step S652). For example, the authentication process can be performed by using a card number, a holder name, an expiration date, and a security code of a credit card or using an authentication number of a gift card. Other known authentication processes may be performed.

The second client apparatus 4 determines whether or not the authentication succeeds by the authentication success determining unit 715 (step S653). When it is determined that the authentication fails (NO in step S653), a message for prompting the user to input the payment information again is displayed, and the payment information is accepted again in step S651.

When the authentication succeeds (YES in step S653), the second client apparatus 4 transmits the purchase request to the mediation server apparatus 6 by the purchase request transmitting unit 716 (step S654). The mediation server apparatus 6 receives the purchase request transmitted by the purchase request transmitting unit 716 by the purchase request receiving unit 717 (step S655).

The mediation server apparatus 6 determines whether or not the electronic content to be purchased is available in the first client apparatus (step S656). When it is determined that the electronic content is available (Yes in step S656), the aforementioned selling execution process is performed, and the electronic content is set to be in a sold state in the first client apparatus (step S657).

When it is determined that the electronic content is unavailable (No in step S656), the mediation server apparatus 6 transmits the usage enabling information for setting the electronic content to be in the available state in the second client apparatus by the usage enabling information transmitting unit 719 to the second client apparatus (step S658).

The second client apparatus 4 receives the usage enabling information transmitted by the usage enabling information transmitting unit 719 (step S659). The second client apparatus 4 sets the electronic content set in the unavailable state in the first client apparatus to be in the available state in the second client apparatus by the electronic content usage enabling unit 721 (step S660). The second client apparatus 4 subtracts the virtual currency corresponding to setting the electronic content to be in the available state from the virtual currency stored in the second virtual currency data storage unit 707 by the virtual currency subtracting unit 710 (step S661).

The mediation server apparatus 6 adds the virtual currency corresponding to setting the electronic content to be in the available state to the virtual currency stored by the third virtual currency data storage unit 708 by the virtual currency adding unit 709 (step S662).

The mediation server apparatus 6 transmits the trading information regarding the purchase (buying) of the electronic content in the second client apparatus to the management server apparatus 7 by the trading information transmitting unit 711 (step S663). The management server apparatus 7 receives the trading information transmitted from the mediation server apparatus 6 by the trading information receiving unit 712 (step S664), and terminates the process.

In the eighth embodiment, it is preferable that a virtual currency corresponding to setting a new electronic content to be in the available state in the first client apparatus is equal to or greater than the sum of a virtual currency corresponding to setting the new electronic content to be in the unavailable state in the first client apparatus and a virtual currency corresponding to setting the new electronic content to be in the available state in the second client apparatus. With such a configuration, the second user who uses the second client apparatus can obtain economic benefits, and it is possible to activate transactions between the first client apparatus and the second client apparatus.

Although it has been described in the eighth embodiment that the authentication of the payment information is performed in the second client apparatus, the present invention is not limited thereto. For example, the authentication process is not performed in the second client apparatus, and may be performed in the mediation server apparatus 6. Alternatively, the authentication of the payment information is performed not in the first client apparatus, the second client apparatus, or the mediation server apparatus 6 but in an external apparatus through the first client apparatus, the second client apparatus, or the mediation server apparatus 6, and only the authentication result may be obtained.

Although it has been described in the eighth embodiment that the authentication process of the payment information is performed by using a credit card or a gift card, the present invention is not limited thereto. For example, the authentication may be performed by mailing an application, transmitting an application by FAX, inputting application information through access to a Web site, or applying through bank remittance.

Although it has been described in the eighth embodiment that the electronic contents are transmitted and received at once, the present invention is not limited thereto. That is, for example, a part of the electronic contents, for example, header information may be previously downloaded, and when the authentication of the payment information is completed, the electronic contents may be completely downloaded. Alternatively, before the authentication is completed, the electronic content which is in the unavailable state may be downloaded.

Although it has been described in the eighth embodiment that the client apparatus includes the virtual currency data storage unit, the present invention is not limited thereto. Information regarding the virtual currency may not be stored in a storage within the client apparatus, and may be obtained by inquiring to an external apparatus.

Although it has been described in the eighth embodiment that the electronic content is stored in the first client apparatus, the present invention is not limited thereto. For example, the electronic content may be stored in the mediation server apparatus 6, and the first client apparatus and the second client apparatus may access to the mediation server apparatus. As a result, the electronic content may be set to be available. That is, these apparatuses may be connected through communication, and a streaming technology for utilizing the electronic content may be used. In this case, since the mediation server apparatus 6 manages the availability of the electronic content, it is possible to suppress a communication load with which the electronic content is transmitted and received, and it is possible to protect copyright on the electronic content.

In the eighth embodiment, it is preferable that the electronic content is an electronic book, a game, audio, and/or video.

As one aspect of the eighth embodiment, it is possible to provide a new system for utilizing the electronic content.

As one aspect of the eighth embodiment, when the usage enabling information received by the second client apparatus is the usage enabling information corresponding to the electronic content as the target for usage, it is possible to appropriately manage the electronic content by setting the electronic content to be available in the second client apparatus.

As one aspect of the eighth embodiment, it is possible to activate the transactions by using the virtual currency as a fee regarding the transfer of the electronic content between the first client apparatus and the second client apparatus.

As one aspect of the eighth embodiment, the selling request for the mediation server apparatus is received, and thus, the transaction is established. As a result, it is possible to provide a new system corresponding to various transactions.

As one aspect of the eighth embodiment, a new system corresponding to various transactions can be provided by establishing a transaction by receiving a buying request to the mediation server apparatus.

In the eighth embodiment, the "client apparatus", the "electronic content", the "usage", the "available", and the "system" can adopt the contents described in the first embodiment in a necessary range.

In the eighth embodiment, the "billing process" and the "usage enabling information" can adopt the contents described in the second embodiment in a necessary range.

In the eighth embodiment, the "virtual currency" and the "transfer" can adopt the contents described in the third embodiment in a necessary range.

In the eighth embodiment, the "mediation server apparatus" and the "management server apparatus" can adopt the contents described in the seventh embodiment in a necessary range.

### Ninth embodiment

An outline of a ninth embodiment of the present invention will be described. In the following, a program causing a first client apparatus to function in an electronic content utilization system that includes the first client apparatus, a second client apparatus, a mediation server apparatus capable of being connected to the first client apparatus and the second client apparatus through communication, and a management server apparatus capable of being connected to the mediation server apparatus through communication, and includes a usage enabler that sets an electronic content set in an unavailable state in the first client apparatus to be in an available state in the second client apparatus when a buying request of the electronic content is received by the mediation server apparatus from the second client apparatus, and in which the mediation server apparatus includes a trading information transmitter that transmits trading information regarding selling of the electronic content in the first client apparatus and/or buying of the electronic content in the second client apparatus to the management server apparatus, and in which the management server apparatus includes a trading information receiver that receives the trading information from the mediation server apparatus will be described as the ninth embodiment.

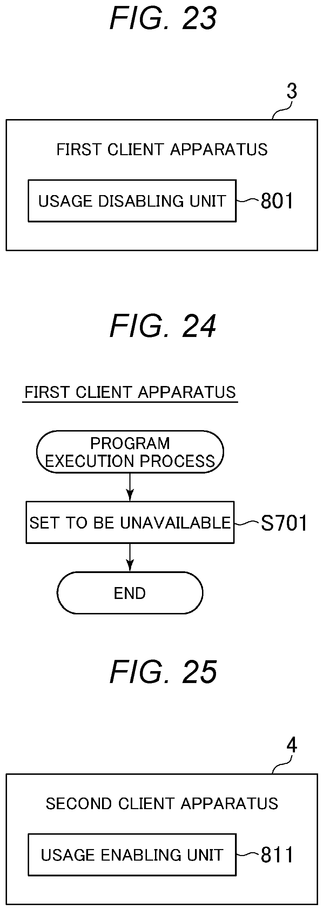

Fig. 23 is a block diagram showing a configuration of a first client apparatus corresponding to at least one of the embodiments of the present invention. A first client apparatus 3 includes at least a usage disabling unit 801.

When the selling request of the electronic content available in the first client apparatus is received by the mediation server apparatus from the first client apparatus and/or the buying request of the electronic content is received by the mediation server apparatus from the second client apparatus, the usage disabling unit 801 has a function of setting the electronic content to be in the unavailable state in the first client apparatus.

Next, a program execution process for utilizing the electronic content according to the ninth embodiment of the present invention will be described. Fig. 24 is a flowchart of the program execution process corresponding to at least one of the embodiments of the present invention.

When the selling request of the electronic content available in the first client apparatus is received by the mediation server apparatus from the first client apparatus and/or the buying request of the electronic content is received by the mediation server apparatus from the second client apparatus, the first client apparatus 3 sets the electronic content to be in the unavailable state in the first client apparatus (step S701), and terminates the process.

As one aspect of the ninth embodiment, it is possible to provide a new system for utilizing the electronic content.

In the ninth embodiment, the "client apparatus", the "electronic content", the "usage", the "available", and the "system" can adopt the contents described in the first embodiment in a necessary range. The "mediation server apparatus" and the "management server apparatus" can adopt the contents described in the seventh embodiment in a necessary range.

### Tenth embodiment

An outline of a tenth embodiment of the present invention will be described. In the following, a program causing a second client apparatus to function in an electronic content utilization system that includes a first client apparatus, the second client apparatus, a mediation server apparatus capable of being connected to the first client apparatus and the second client apparatus through communication, and a management server apparatus capable of being connected to the mediation server apparatus through communication, and includes a usage disabler that sets an electronic content to be in an unavailable state in the first client apparatus when a selling request of the electronic content available in the first client apparatus is received by the mediation server apparatus from the first client apparatus and/or a buying request of the electronic content is received by the mediation server apparatus from the second client apparatus, in which the mediation server apparatus includes a trading information transmitter that transmits trading information regarding selling of the electronic content in the first client apparatus and/or buying of the electronic content in the second client apparatus to the management server apparatus, and in which the management server apparatus includes a trading information receiver that receives the trading information from the mediation server apparatus will be described as the tenth embodiment.

Fig. 25 is a block diagram showing a configuration of a second client apparatus corresponding to at least one of the embodiments of the present invention. A second client apparatus 4 includes at least a usage enabling unit 811.

The usage enabling unit 811 has a function of setting the electronic content set in the unavailable state in the first client apparatus to be in the available state in the second client apparatus, when the buying request of the electronic content is received by the mediation server apparatus from the second client apparatus.

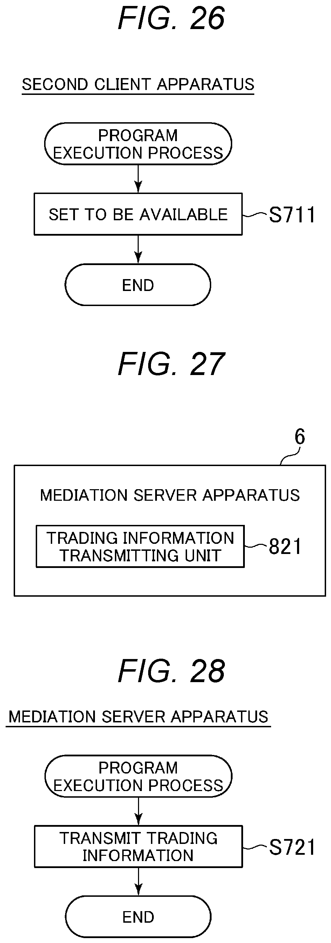

Next, a program execution process for utilizing the electronic content according to the tenth embodiment of the present invention will be described. Fig. 26 is a flowchart of the program execution process corresponding to at least one of the embodiments of the present invention.

When the buying request of the electronic content is received by the mediation server apparatus from the second client apparatus, the second client apparatus 4 sets the electronic content set in the unavailable state in the first client apparatus to be in the available state in the second client apparatus (step S711), and terminates the process.

As one aspect of the tenth embodiment, it is possible to provide a new system for utilizing the electronic content.

In the tenth embodiment, the "client apparatus", the "electronic content", the "usage", the "available", and the "system" can adopt the contents described in the first embodiment in a necessary range. The "mediation server apparatus" and the "management server apparatus" can adopt the contents described in the seventh embodiment in a necessary range.

### Eleventh embodiment

An outline of an eleventh embodiment of the present invention will be described. In the following, a program causing a mediation server apparatus to function in an electronic content utilization system that includes first client apparatus, a second client apparatus, the mediation server apparatus capable of being connected to the first client apparatus and the second client apparatus through communication, and a management server apparatus capable of being connected to the mediation server apparatus through communication, and includes a usage disabler that sets an electronic content to be in an unavailable state in the first client apparatus when a selling request of the electronic content available in the first client apparatus is received by the mediation server apparatus from the first client apparatus and/or a buying request of the electronic content is received by the mediation server apparatus from the second client apparatus and a usage enabler that sets the electronic content set in the unavailable state in the first client apparatus to be in an available state in the second client apparatus when the buying request of the electronic content is received by the mediation server apparatus from the second client apparatus, and in which the management server apparatus includes a trading information receiver that receives trading information from the mediation server apparatus will be described as the eleventh embodiment.

Fig. 27 is a block diagram showing a configuration of a mediation server apparatus corresponding to at least one of the embodiments of the present invention. The mediation server apparatus 6 includes at least a trading information transmitting unit 821.

The trading information transmitting unit 821 has a function of causing the mediation server apparatus to transmit trading information regarding selling of the electronic content in the first client apparatus and/or buying of the electronic content in the second client apparatus to the management server apparatus.

Next, a program execution process for utilizing the electronic content according to the eleventh embodiment of the present invention will be described. Fig. 28 is a flowchart of the program execution process corresponding to at least one of the embodiments of the present invention.

The mediation server apparatus 6 transmits trading information regarding selling of the electronic content in the first client apparatus and/or buying of the electronic content in the second client apparatus to the management server apparatus (step S721), and terminates the process.

As one aspect of the eleventh embodiment, it is possible to provide a new system for utilizing the electronic content.

In the eleventh embodiment, the "client apparatus", the "electronic content", the "usage", the "available", and the "system" can adopt the contents described in the first embodiment in a necessary range. The "mediation server apparatus" and the "management server apparatus" can adopt the contents described in the seventh embodiment in a necessary range.

### Twelfth embodiment

An outline of a twelfth embodiment of the present invention will be described. In the following, a program causing a management server apparatus to function in an electronic content utilization system to function that includes a first client apparatus, a second client apparatus, a mediation server apparatus capable of being connected to the first client apparatus and the second client apparatus through communication, and the management server apparatus capable of being connected to the mediation server apparatus through communication, and includes a usage disabler that sets an electronic content to be in an unavailable state in the first client apparatus when a selling request of the electronic content available in the first client apparatus is received by the mediation server apparatus from the first client apparatus and/or a buying request of the electronic content is received by the mediation server apparatus from the second client apparatus and a usage enabler that sets the electronic content set in the unavailable state in the first client apparatus to be in an available state in the second client apparatus when the buying request of the electronic content is received by the mediation server apparatus from the second client apparatus, and in which the mediation server apparatus includes a trading information transmitter that transmits trading information regarding selling of the electronic content in the first client apparatus and/or buying of the electronic content in the second client apparatus to the management server apparatus will be described as the twelfth embodiment.

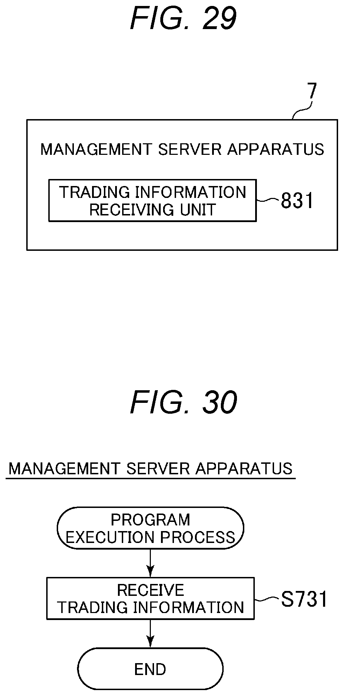

Fig. 29 is a block diagram showing a configuration of a management server apparatus corresponding to at least one of the embodiments of the present invention. The management server apparatus 7 includes at least a trading information receiving unit 831.

The trading information receiving unit 831 has a function of receiving the trading information from the mediation server apparatus.

Next, a program execution process for utilizing the electronic content according to the twelfth embodiment of the present invention will be described. Fig. 30 is a flowchart of the program execution process corresponding to at least one of the embodiments of the present invention.

The management server apparatus 7 receives the trading information from the mediation server apparatus (step S731), and terminates the process.

As one aspect of the twelfth embodiment, it is possible to provide a new system for utilizing the electronic content.

In the twelfth embodiment, the "client apparatus", the "electronic content", the "usage", the "available", and the "system" can adopt the contents described in the first embodiment in a necessary range. The "mediation server apparatus" and the "management server apparatus" can adopt the contents described in the seventh embodiment in a necessary range.

### Thirteenth embodiment

Next, an outline of a thirteenth embodiment of the present invention will be described. In the thirteenth embodiment, a system that adopts the system described in the fourth embodiment will be described as an example. For example, the system described in the thirteenth embodiment can be used for a business model in sales and second-hand sales of the electronic contents.

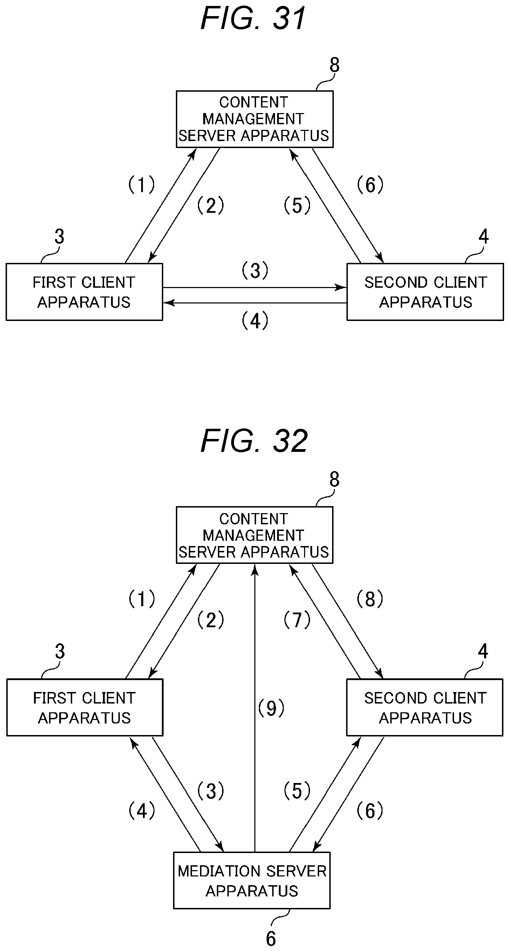

Fig. 31 is a schematic diagram showing an outline of the system corresponding to at least one of the embodiments of the present invention. The system is configured to include a first client apparatus 3, a second client apparatus 4, and a content management server apparatus 8.

The first client apparatus 3 and the second client apparatus 4 are connected so as to deliver the electronic file to each other by using a peer-to-peer (P2P) technology. Such a system can be realized by using middleware specialized in transmitting and receiving electronic data through communication.

The configuration of the system can adopt the configuration shown in Fig. 7 in a necessary range. The configurations of the first client apparatus 3 and the second client apparatus 4 can adopt the configurations shown in Fig. 6 in a necessary range. The configuration of the content management server apparatus 8 can adopt the configuration shown in Fig. 10 in a necessary range.

Next, a flow of processes of the thirteenth embodiment will be described with reference to Fig. 31. Numbers in parentheses in the following description correspond to numbers in parentheses shown in Fig. 31. A flow of processes of the present embodiment can adopt the processes of the flowchart shown in Fig. 8 in a necessary range.

Initially, the user of the first client apparatus 3 performs a procedure for paying the fee of the content by applying the usage of the content for the content management server apparatus 8 (process of (1) in Fig. 31). For example, the payment procedure is performed such that an invoice is mailed based on the application of the usage of the content of the user and the fee is paid based on the invoice or when the user accesses to an application Web site and inputs application information, the fee is paid by using a credit card or an electronic money. The payment may be a physical payment using cash, or may be a payment using an electromagnetic method such as an electronic money. The payment method is not limited.

Subsequently, when the payment procedure is accepted, the content management server apparatus 8 availably provides the electronic content to the user of the first client apparatus 3 (process of (2) in Fig. 31). Examples of the providing method include a method of accessing to the content management server apparatus 8 and downloading the electronic content, and a method of mailing an electronic medium such as a disk that stores data of the electronic content and performing an installation process in the first client apparatus. Here, the electronic content is provided and stored in the first client apparatus 3 according to a legitimate route.

It is preferable that the electronic content is availably provided in association with the first client apparatus 3. For example, in the payment procedure of (1) in Fig. 31, it is preferable that information such as a media access control address (MAC address) of the first client apparatus 3 or a universally unique identifier (UUID) (also referred to as a globally unique identifier (GUID)) which is capable of uniquely identifying the first client apparatus 3 is transmitted to the content management server apparatus 8 and the usage enabling information of the downloaded electronic content is generated. That is, the electronic content provided in (2) of Fig. 31 is set to be in the available state in the first client apparatus 3. With such a configuration, it is possible to permit the usage only in the determined terminal, and it is possible to appropriately manage the electronic content.

Next, a case where the user of the first client apparatus 3 and the user of the second client apparatus 4 agree with each other regarding the transfer of the electronic content will be described. The transfer request of the electronic content is transmitted and received between the first client apparatus 3 and the second client apparatus 4 by the electronic content transfer request transmitting unit 201 and the electronic content transfer request receiving unit 202. Thereafter, the second client apparatus 4 transmits information indicating that the payment transaction succeeds to the first client apparatus 3 by the payment information accepting unit 203, the payment information authenticating unit 204, and the authentication success determining unit 205.

When the first client apparatus 3 receives the success information of the transaction by the payment information receiving unit 207, the first client apparatus 3 transmits the data of the electronic content to the second client apparatus 4 by the electronic content transmitting unit 208, and the second client apparatus 4 receives the data of the electronic content by the electronic content receiving unit 209 (process of (3) in Fig. 31). At this point of time, the electronic contents are present in the first client apparatus 3 and the second client apparatus 4.

Here, the electronic content of the first client apparatus 3 is set to be in the unavailable state by the electronic content usage disabling unit 210. The disabling of the usage of the electronic content can adopt the description regarding the disabling of the usage of the electronic content of the third embodiment in a necessary range. At this point of time, the data of the electronic content of the first client apparatus 3 is removed. A blockchain technology may be adopted as means for proving that the data is removed.

Next, the transaction of the virtual currency between the first client apparatus 3 and the second client apparatus 4 is completed by the virtual currency adding unit 212 and the virtual currency subtracting unit 214 (process of (4) in Fig. 31).

Here, the enabling of the usage of the electronic content is performed in the second client apparatus. A case where the electronic content is availably provided in association with the first client apparatus 3 which initially purchases the electronic content according to a legitimate route will be described as an example of the enabling of the usage of the electronic content. Since the second client apparatus 4 which is the terminal different from the first client apparatus 3 does not have information capable of uniquely specifying the first client apparatus 3, it is difficult to enable the usage of the electronic content in the second client apparatus 4.

Thus, the user of the second client apparatus 4 applies for the enabling of the usage of the electronic content to the content management server apparatus 8. The application may be a physical application by post or FAX, or may be an application using an electromagnetic method. Specifically, the information (MAC address or UUID) capable of uniquely specifying the second client apparatus 4 and the application information are transmitted to the content management server apparatus 8 (process of (5) in Fig. 31). The application for enabling the usage of the content may be performed with payment of money.

The content management server apparatus 8 that receives the application information generates the usage enabling information (also referred to as a release code) by using specific information of the second client apparatus 4, and transmits the generated information to the second client apparatus 4 (process of (6) in Fig. 31). The second client apparatus 4 can set the electronic content to be in the available state by receiving the usage enabling information and applying the received usage enabling information to the electronic content.

Although it has been described in the thirteenth embodiment that the application for enabling the usage of the electronic content is performed by the user of the second client apparatus 4, the present invention is not limited thereto. For example, a method for permitting the access to the electronic content and unlocking the electronic content may be used. The electronic content set to be available may be limited to the electronic content set to be unavailable. The electronic content may include a receiver for accepting the usage enabling information, and the authentication process may be performed by accepting the usage enabling information.

In the thirteenth embodiment, it is preferable that a virtual currency (that is, cost for purchasing the electronic content according to a legitimate route) corresponding to setting a new electronic content to be in the available state in the first client apparatus is equal to or greater than the sum of a virtual currency (that is, selling price) corresponding to setting the new electronic content to be in the unavailable state in the first client apparatus and a virtual currency (that is, purchasing price) corresponding to setting the new electronic content to be in the available state in the second client apparatus. With such a configuration, the second user who uses the second client apparatus can obtain economic benefits, and it is possible to activate transactions between the first client apparatus and the second client apparatus.

In the thirteenth embodiment, it is preferable that the electronic content is an electronic book, a game, audio, and/or video.

As one aspect of the thirteenth embodiment, it is possible to provide a new system for utilizing the electronic content.

As one aspect of the thirteenth embodiment, when the usage enabling information received by the second client apparatus is the usage enabling information corresponding to the electronic content as the target for usage, it is possible to appropriately manage the electronic content by setting the electronic content to be available in the second client apparatus.

As one aspect of the thirteenth embodiment, when the usage of the electronic content resold to the second client apparatus from the first client apparatus is enabled, the user of the second client apparatus applies for the usage to the content management server apparatus 8. Accordingly, a content provider can appropriately manage the electronic content, and can request the user of the electronic content to appropriately pay the fee. Accordingly, the content provider can appropriately receive the fee of even the electronic content that has been distributed in a market without receiving the fee, and thus, the present embodiment is very useful.

As one aspect of the thirteenth embodiment, it is possible to activate the transactions by using the virtual currency as a fee regarding the transfer of the electronic content between the first client apparatus and the second client apparatus.

In the thirteenth embodiment, the "client apparatus", the "electronic content", the "usage", the "available", and the "system" can adopt the contents described in the first embodiment in a necessary range.

In the thirteenth embodiment, the "billing process" and the "usage enabling information" can adopt the contents described in the second embodiment in a necessary range. The "virtual currency" and the "transfer" can adopt the contents described in the third embodiment in a necessary range.

In the thirteenth embodiment, the "content management server apparatus" is, for example, a server apparatus that manages the electronic content, and is a server apparatus managed by a business operator that provides the electronic content. The content management server apparatus can serve as the management server apparatus of another embodiment.

### Fourteenth embodiment

Next, an outline of a fourteenth embodiment of the present invention will be described. In the fourteenth embodiment, a system that adopts the system described in the eighth embodiment will be described as an example. For example, the system described in the fourteenth embodiment can be used for a business model in sales and second-hand sales of the electronic contents.

Fig. 32 is a schematic diagram showing an outline of the system corresponding to at least one of the embodiments of the present invention. The system is configured to include a first client apparatus 3, a second client apparatus 4, a mediation server apparatus 6, and a content management server apparatus 8.

The first client apparatus 3 and the second client apparatus 4 are connected to the mediation server apparatus 6 and the content management server apparatus 8 via a communication network. The mediation server apparatus 6 is connected to the content management server apparatus 8 via the communication network.

The configuration of the system can adopt the configuration shown in Fig. 20 in a necessary range. The configurations of the first client apparatus 3 and the second client apparatus 4 can adopt the configurations shown in Fig. 6 in a necessary range. The configurations of the mediation server apparatus 6 and the content management server apparatus 8 can adopt the configurations shown in Fig. 10 in a necessary range. The first client apparatuses 3, the second client apparatuses 4, the mediation server apparatus 6, and the content management server apparatus 8 may not be constantly connected, or may be connected as needed. The mediation server apparatus 6 and the content management server apparatus 8 may not be constantly connected, or may be connected as needed.

Next, a flow of processes of the fourteenth embodiment will be described with reference to Fig. 32. Numbers in parentheses in the following description correspond to numbers in parentheses shown in Fig. 32. A flow of processes of the present embodiment can adopt the processes of the flowcharts shown in Figs. 21 and 22 in a necessary range.

Initially, the user of the first client apparatus 3 performs a procedure for paying the fee of the content by applying the usage of the content for the content management server apparatus 8 (process of (1) in Fig. 32). For example, the payment procedure is performed such that an invoice is mailed based on the application of the usage of the content of the user and the fee is paid based on the invoice or when the user accesses to an application Web site and inputs application information, the fee is paid by using a credit card or an electronic money. The payment may be a physical payment using cash, or may be a payment using an electromagnetic method such as an electronic money. The payment method is not limited.

Subsequently, when the payment procedure is accepted, the content management server apparatus 8 availably provides the electronic content to the user of the first client apparatus 3 (process of (2) in Fig. 32). Examples of the providing method include a method of accessing to the content management server apparatus 8 and downloading the electronic content, and a method of mailing an electronic medium such as a disk that stores data of the electronic content and performing an installation process in the first client apparatus 3. Here, the electronic content is provided and stored in the first client apparatus 3 according to a legitimate route.

It is preferable that the electronic content is availably provided in association with the first client apparatus 3. For example, in the payment procedure of (1) in Fig. 32, it is preferable that information (MAC address) which is capable of uniquely identifying the first client apparatus 3 is transmitted to the content management server apparatus 8 and the usage enabling information of the downloaded electronic content is generated. That is, the electronic content provided in (2) of Fig. 32 is set to be in the available state in the first client apparatus 3. With such a configuration, it is possible to permit the usage only in the determined terminal, and it is possible to appropriately manage the electronic content.

Next, a case where the user of the first client apparatus 3 transfers (sells) the electronic content will be described. A selling process of the electronic content can adopt the description of the selling execution process of the third embodiment in a necessary range.

The transfer request of the electronic content is transmitted and received between the first client apparatus 3 and the mediation server apparatus 6 by the selling request transmitting unit 701 and the selling request receiving unit 702.

Subsequently, the usage disabling information is transmitted and received between the first client apparatus 3 and the mediation server apparatus 6 by the usage disabling information transmitting unit 703 and the usage disabling information receiving unit 704. The first client apparatus 3 sets the electronic content to be in the unavailable state by the electronic content usage disabling unit 705. For example, the electronic content is set to be in the unavailable state by being deleted. The disabling of the usage of the electronic content can adopt the contents described in the third embodiment in a necessary range.

Subsequently, the first client apparatus 3 transmits the data of the electronic content to the mediation server apparatus 6, and the mediation server apparatus 6 receives the data of the electronic content (process of (3) in Fig. 32). Next, the transaction of the virtual currency between the first client apparatus 3 and the mediation server apparatus 6 is completed by the virtual currency adding unit 709 and the virtual currency subtracting unit 710 (process of (4) in Fig. 32).

Next, a case where the user of the second client apparatus 4 purchases the electronic content will be described. A purchase process of the electronic content can adopt the description of the purchase execution process of the third embodiment in a necessary range.

The second user who operates the second client apparatus designates any electronic content from a list of the electronic contents displayed so as to be recognizable from the mediation server apparatus 6. The second client apparatus 4 authenticates the payment information by the payment information accepting unit 713, the payment information authenticating unit 714, and the authentication success determining unit 715. For example, the authentication process can be performed by using a card number, a holder name, an expiration date, and a security code of a credit card or using an authentication number of a gift card. Other known authentication processes may be performed.

When it is confirmed that the fee of the electronic content is paid, the mediation server apparatus 6 transmits the data of the electronic content to the second client apparatus 4, and the second client apparatus 4 receives the data of the electronic content (process of (5) in Fig. 32).

Next, the transaction of the virtual currency between the second client apparatus 4 and the mediation server apparatus 6 is completed by the virtual currency adding unit 709 and the virtual currency subtracting unit 710 (process of (6) in Fig. 32). The transaction of the virtual currency may correspond to the transfer of the virtual currency.

Subsequently, the second client apparatus 4 enables the usage of the electronic content. A case where the electronic content is availably provided in association with the first client apparatus 3 which initially purchases the electronic content according to a legitimate route will be described as an example of the enabling of the usage of the electronic content. Since the second client apparatus 4 which is the terminal different from the first client apparatus 3 does not have information capable of uniquely specifying the first client apparatus 3, it is difficult to enable the usage of the electronic content in the second client apparatus 4.

Thus, the user of the second client apparatus 4 applies for the enabling of the usage of the electronic content to the content management server apparatus 8. The application may be a physical application by post and FAX, or may be an application using an electromagnetic method. Specifically, the information (MAC address or UUID) capable of uniquely specifying the second client apparatus 4 and the application information are transmitted to the content management server apparatus 8 (process of (7) in Fig. 32). The application for enabling the usage of the content may be performed with payment of money.

The content management server apparatus 8 that receives the application information generates the usage enabling information (also referred to as a release code) by using specific information of the second client apparatus 4, and transmits the generated information to the second client apparatus 4 (process of (8) in Fig. 32). The second client apparatus 4 can set the electronic content to be in the available state by receiving the usage enabling information and applying the received usage enabling information to the electronic content.

The mediation server apparatus 6 performs a process of paying a mediation fee regarding the handling of the electronic content for the content management server apparatus 8 according to a predetermined condition (process of (9) in Fig. 32). The payment process may be performed by an electromagnetic process such as virtual currency, or may be performed by a physical process of transferring cash.

The predetermined condition in which the mediation fee is paid may occur whenever the electronic content is purchased (process of (3) in Fig. 32) and whenever the electronic content is sold (process of (5) in Fig. 32). The predetermined condition may be a measured rate system in which the fee is charged according to the number of times the electronic content is handled, or may be a fixed monthly charge system in which a fixed fee is charged for a predetermined period (for example, monthly). A volume discount system in which the fee is discounted according to the number of times the electronic content is handled may be adopted.

Although it has been described in the fourteenth embodiment that the application for enabling the usage of the electronic content is performed by the user of the second client apparatus 4, the present invention is not limited thereto. For example, a method for permitting the access to the electronic content and unlocking the electronic content may be used. The electronic content set to be available may be limited to the electronic content set to be unavailable. The electronic content may include a receiver for accepting the usage enabling information, and the authentication process may be performed by accepting the usage enabling information.

In the fourteenth embodiment, it is preferable that a virtual currency (that is, cost for purchasing the electronic content according to a legitimate route) corresponding to setting a new electronic content to be in the available state in the first client apparatus is equal to or greater than the sum of a virtual currency (that is, selling price) corresponding to setting the new electronic content to be in the unavailable state in the first client apparatus and a virtual currency (that is, purchasing price) corresponding to setting the new electronic content to be in the available state in the second client apparatus. With such a configuration, the second user who uses the second client apparatus can obtain economic benefits, and it is possible to activate transactions between the first client apparatus and the second client apparatus.

In the fourteenth embodiment, it is preferable that the electronic content is an electronic book, a game, audio, and/or video.

Although it has been described in the fourteenth embodiment that the mediation server apparatus 6 pays the fee to the content management server apparatus 8, the present invention is not limited thereto. For example, in the application (procedure of (7) in Fig. 32) to the content management server apparatus 8 from the second client apparatus 4, the fee may be paid by the mediation server apparatus 6 by paying a predetermined charge.

As one aspect of the fourteenth embodiment, it is possible to provide a new system for utilizing the electronic content.

As one aspect of the fourteenth embodiment, when the usage enabling information received by the second client apparatus is the usage enabling information corresponding to the electronic content as the target for usage, it is possible to appropriately manage the electronic content by setting the electronic content to be available in the second client apparatus.

As one aspect of the fourteenth embodiment, when the usage of the electronic content resold to the second client apparatus from the first client apparatus is enabled, the user of the second client apparatus applies for the usage to the content management server apparatus 8. Accordingly, a content provider can appropriately manage the electronic content, and can request the user of the electronic content to appropriately pay the fee. Accordingly, the content provider can appropriately receive the fee of even the electronic content that has been distributed in a market without receiving the fee, and thus, the present embodiment is very useful.

As one aspect of the fourteenth embodiment, it is possible to activate the transactions by using the virtual currency as a fee regarding the transfer of the electronic content between the first client apparatus and the second client apparatus.

As one aspect of the fourteenth embodiment, the mediation fee generated when the mediation server apparatus mediates the electronic content is also generated even when the electronic content is purchased and even when the electronic content is sold, and thus, the content provider who provides the electronic content according to a legitimate route can compensates for losses when the electronic content is not purchased according to a sales route managed by the company of the content provider. Accordingly, the present embodiment is very useful.

In the fourteenth embodiment, the "client apparatus", the "electronic content", the "usage", the "available", and the "system" can adopt the contents described in the first embodiment in a necessary range.

In the fourteenth embodiment, the "billing process" and the "usage enabling information" can adopt the contents described in the second embodiment in a necessary range. The "virtual currency" and the "transfer" can adopt the contents described in the third embodiment in a necessary range. The "content management server apparatus" can adopt the contents described in the thirteenth embodiment in a necessary range.

### Fifteenth embodiment

Next, an outline of a fifteenth embodiment of the present invention will be described. In the fifteenth embodiment, a system that adopts the system described in the eighth embodiment will be described as an example. For example, the system described in the fifteenth embodiment can be used for a business model in sales of save data which is data in which a progress status of a game or an attribute of a player character is stored by executing a game program included in the electronic content and advancing the game.

The outline of the system can adopt the outline shown in Fig. 32 in a necessary range. The configuration of the system can adopt the configuration shown in Fig. 20 in a necessary range. The configurations of the first client apparatus 3 and the second client apparatus 4 can adopt the configurations shown in Fig. 6 in a necessary range. The configurations of the mediation server apparatus 6 and the content management server apparatus 8 can adopt the configurations shown in Fig. 10 in a necessary range. The first client apparatuses 3, the second client apparatuses 4, the mediation server apparatus 6, and the content management server apparatus 8 may not be constantly connected to each other, or may be connected as needed.

The system according to the fifteenth embodiment adopts a distributed ledger technology (DLT) which is one of blockchains. Data such as sales and deletion of the save data and transfer of data are shared by a part or all of the client apparatuses and server apparatuses in the system by the distributed ledger technology.

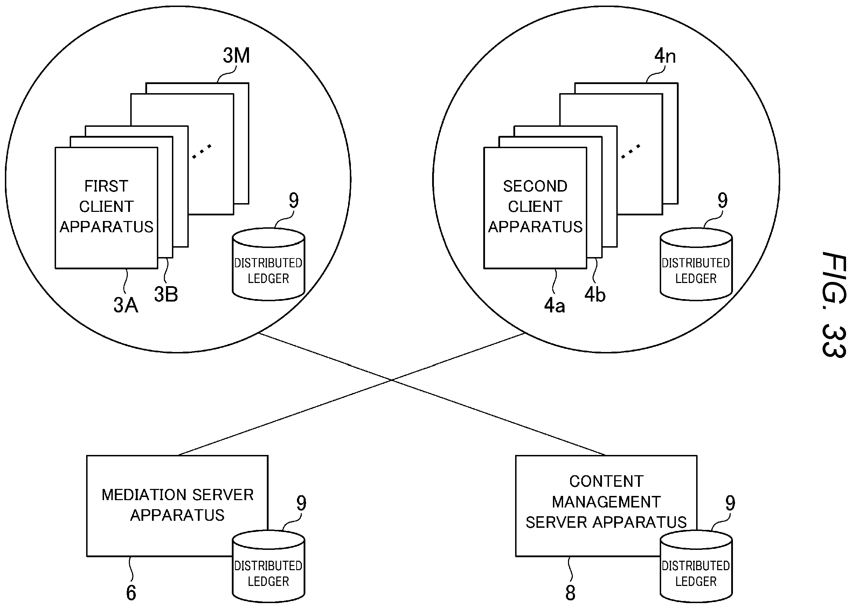

Fig. 33 is a schematic diagram for describing the distributed ledger technology corresponding to at least one of the embodiments of the present invention. The system is configured to include a first client apparatus 3, a second client apparatus 4, a mediation server apparatus 6, and a content management server apparatus 8. The first client apparatus 3, the second client apparatus 4, the mediation server apparatus 6, and the content management server apparatus 8 share ledger information 9.

The distributed ledger technology is used in a closed network in which participants are limited. For example, the present invention can be applied within a limited range of a publisher who sells service platforms and electronic contents and a consumer who purchases and uses electronic contents.

In a case where a plurality of organizations shares a ledger, there is an advantage that an equal, fair, and neutral ledger can be realized without establishing a corporation by using the distributed ledger technology. As a result, operation costs can be reduced.

Next, a flow of processes of the fifteenth embodiment will be described. A process of selling the save data in the fifteenth embodiment will be described by using the outline of the system shown in Fig. 32. The flow of processes of the present embodiment can adopt the processes of the flowcharts shown in Figs. 21 and 22 in a necessary range.

It is assumed that the save data sold by any user is stored in the content management server apparatus 8. The user of the first client apparatus 3 accesses the mediation server apparatus 6 or the content management server apparatus 8. The mediation server apparatus 6 or the content management server apparatus 8 provides information of the save data capable of being sold to the user so as to be selectable. The mediation server apparatus 6 and/or the content management server apparatus 8 are managed by a publisher that sells the sales service platform of the save data and/or the electronic contents.

### Sales screen

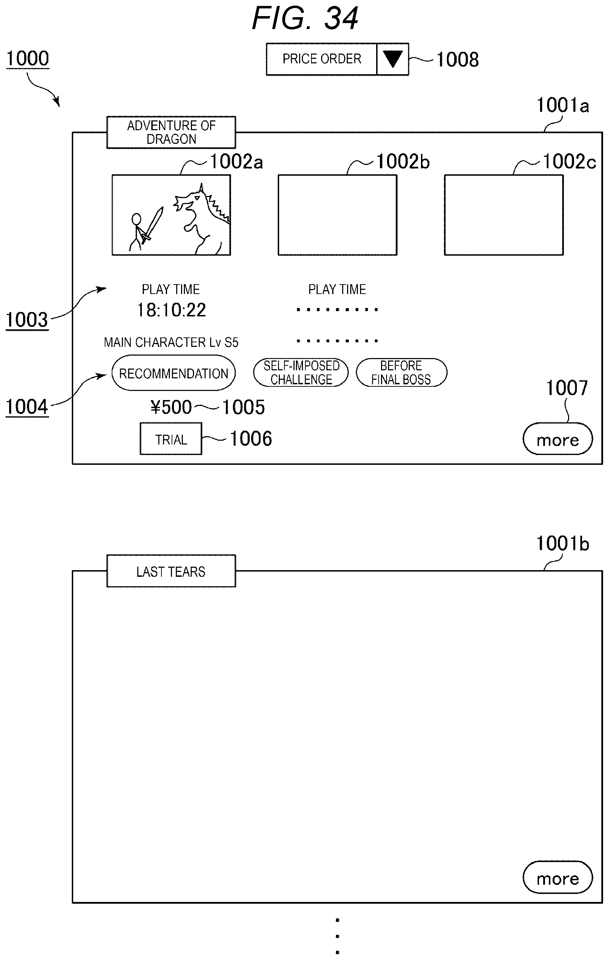

Fig. 34 is a diagram showing a sales screen of the electronic content corresponding to at least one of the embodiments of the present invention. The save data being sold are distinguishably displayed as titles 1001a, 1001b, ··· on the sales screen 1000 for corresponding game programs. The title 1001 includes images 1002 representing the contents of the save data, data details 1003 representing the information of the save data, kind information 1004 representing the kind of the save data, price information 1005, a trial button 1006 for trying the game program by using the save data, and a read button 1007 for displaying more information. A sort tab 1008 for sorting information is included in the sales screen 1000.

The images 1002 are images representing at least a part of the contents of the electronic content, and may be a still image or a video. For example, the images are images which represent the contents of the save data and increase an intention to buy such as enhancement of an outline or a character. As the kind information 1004, a predetermined classification may be set by the user who sells the save data, or the mediation server apparatus 6 or the content management server apparatus 8 may set information by analyzing the contents of the save data according to a predetermined rule. As an example of the classification, the user is about to clear a game of a so-called self-imposed challenge in which the user is present at a party with a high level, a rare character is at the party, and the user faithfully obeys the rule uniquely decided by the user.

Whether or not the user obeys the rule uniquely set by the user can be decided by a report from the user who sells the save data. The report contents include, for example, playing without buying the electronic content, never escaping even when the user encounters an enemy, and playing without having protection tools. The kind information 1004 may accept a click operation or a tap operation. When the operation is accepted, control may be performed such that the electronic content matching the contents of the kind information 1004 for which the operation is accepted is displayed.

The price information 1005 may be set by the user who sells the save data, or may be decided by the mediation server apparatus 6 or the content management server apparatus 8 based on the kind information 1004. When the trial button 1006 is pressed, at least a part of the contents of the save data is advanced. At this time, the game program can be executed and the save data can be tried in the mediation server apparatus 6 or the content management server apparatus 8 without transferring the save data to the client apparatus. It is possible to execute the game program on the server apparatus by applying a technology regarding a virtual machine.

The sort tab 1008 has a function of sorting the save data being sold. As an example of the sales screen 1000, the sales screens are arranged for the game titles, but the present invention is not limited thereto. For example, the save data intended by the user can be displayed by selecting the tab such as a price order, a length of a play time, or presence or absence of a rare character difficult to be obtained.

The description is returned to the processes in Fig. 32. First, a case where the electronic content is directly purchased from the content management server will be described. The user performs a procedure for paying for the displayed save data by operating the first client apparatus 3 (process (1) in Fig. 32). Subsequently, when the payment procedure is accepted, the content management server apparatus 8 provides the save data to be available to the user of the first client apparatus 3 (process of (2) in Fig. 32). As the providing method, transaction information is initially recorded in the distributed ledger, and information indicating that the ownership of the save data is transferred to the user of the first client apparatus 3 is recorded. As a result, it is proved that the user is an authorized owner of the save data.

It is preferable that the save data is provided to be available in association with the first client apparatus 3 or a user who operates the first client apparatus 3. For example, in the payment procedure of (1) in Fig. 32, it is preferable that information (such as a MAC address) that can uniquely identify the first client apparatus 3 and information (such as account information) that can uniquely identify the user are recorded in the distributed ledger. It is preferable that the usage enabling information of the save data is generated based on the record of the distributed ledger. That is, the save data provided in (2) of Fig. 32 is set to be available by the first client apparatus 3.

Next, a case where the user of the first client apparatus 3 transfers (sells) the save data will be described. A selling process of the save data can adopt the description of the selling execution process of the third embodiment in a necessary range.

The sale request transmitting unit 701 and the sale request receiving unit 702 transmit and receive a save data transfer request between the first client apparatus 3 and the mediation server apparatus 6.

Subsequently, the usage disabling information is transmitted and received between the first client apparatus 3 and the mediation server apparatus 6 by the usage disabling information transmitting unit 703 and the usage disabling information receiving unit 704. The first client apparatus 3 sets the save data to be in the unavailable state by the electronic content usage disabling unit 705. For example, the save data is set to be in the unavailable state by being deleted. The disabling of the usage of the save data can adopt the contents described in the third embodiment in a necessary range.

Subsequently, the first client apparatus 3 transmits the save data to the mediation server apparatus 6, and the mediation server apparatus 6 receives the save data (process of (3) in Fig. 32). Next, the transaction of the virtual currency between the first client apparatus 3 and the mediation server apparatus 6 is completed by the virtual currency adding unit 709 and the virtual currency subtracting unit 710 (process of (4) in Fig. 32).

Next, a case where the user of the second client apparatus 4 purchases the save data will be described. A purchase process of the electronic content can adopt the description of the purchase execution process of the third embodiment in a necessary range.

The second user who operates the second client apparatus designates any save data from the sales screen of the save data displayed so as to be recognizable from the mediation server apparatus 6. The second client apparatus 4 authenticates the payment information by the payment information accepting unit 713, the payment information authenticating unit 714, and the authentication success determining unit 715.

When it is confirmed that the fee of the save data is paid, the mediation server apparatus 6 transmits the data of the save data to the second client apparatus 4, and the second client apparatus 4 receives the data of the save data (process of (5) in Fig. 32).

Next, the transaction of the virtual currency between the second client apparatus 4 and the mediation server apparatus 6 is completed by the virtual currency adding unit 709 and the virtual currency subtracting unit 710 (process of (6) in Fig. 32).

Subsequently, the second client apparatus 4 enables the usage of the save data. A case where the save data is provided to be available in association with the first client apparatus 3 which initially purchases the save data according to a legitimate route will be described as an example of the enabling of the usage of the save data. Since the second client apparatus 4 which is the terminal different from the first client apparatus 3 and the first client apparatus 3 which is legitimate owner information recorded in the distributed ledger do not match, it is difficult to enable the usage of the electronic content in the second client apparatus 4.

Thus, the user of the second client apparatus 4 applies for the enabling of the usage of the server data to the content management server apparatus 8. The application may be a physical application by post and FAX, or may be an application using an electromagnetic method. Specifically, the information (MAC address or UUID) capable of uniquely specifying the second client apparatus 4 or the information (account information) capable of uniquely identifying the user of the second client apparatus 4 and the application information are transmitted to the content management server apparatus 8 (process of (7) in Fig. 32). The application for enabling the usage of the content may be performed with payment of money.

The content management server apparatus 8 that receives the application information records the information in the distributed ledger by using the specific information of the second client apparatus 4. This information is the usage enabling information of the save data, and the usage enabling information indicating that the usage of the save data is enabled is transmitted to the second client apparatus 4 (process (8) in Fig. 32). The second client apparatus 4 determines that the usage of the save data is enabled by receiving the usage enabling information.

The mediation server apparatus 6 performs a process of paying a mediation fee regarding the handling of the save data for the content management server apparatus 8 according to a predetermined condition (process of (9) in Fig. 32). The payment process may be performed by an electromagnetic process such as virtual currency, or may be performed by a physical process of transferring cash.

The predetermined condition in which the mediation fee is paid may occur whenever the save data is purchased (process of (3) in Fig. 32) and whenever the save data is sold (process of (5) in Fig. 32). The predetermined condition may be a measured rate system in which the fee is charged according to the number of times the save data is handled, or may be a fixed monthly charge system in which a fixed fee is charged for a predetermined period (for example, monthly). A volume discount system in which the fee is discounted according to the number of times the electronic content is handled may be adopted.

Although it has been described in the fifteenth embodiment that the mediation server apparatus 6 pays the fee to the content management server apparatus 8, the present invention is not limited thereto. For example, in the application (procedure of (7) in Fig. 32) to the content management server apparatus 8 from the second client apparatus 4, the fee may be paid by the mediation server apparatus 6 by paying a predetermined charge.

Although it has been described in the fifteenth embodiment that the user searches for the electronic content (save data), the present invention is not limited thereto. For example, the user may register a favorite classification. When the electronic content matching the registered classification is sold, the system may be configured to automatically perform notification by transmitting an e-mail or a message.

As one aspect of the fifteenth embodiment, it is possible to provide a new system for utilizing the electronic content.

As one aspect of the fifteenth embodiment, when the usage enabling information received by the second client apparatus is the usage enabling information corresponding to the electronic content as the target for usage, it is possible to appropriately manage the electronic content by setting the electronic content to be available in the second client apparatus.

As one aspect of the fifteenth embodiment, when the usage of the electronic content resold to the second client apparatus from the first client apparatus is enabled, the user of the second client apparatus applies for the usage to the content management server apparatus 8. Accordingly, a content provider can appropriately manage the electronic content, and can request the user of the electronic content to appropriately pay the fee. Accordingly, the content provider can appropriately receive the fee of even the electronic content that has been distributed in a market without receiving the fee, and thus, the present embodiment is very useful.

As one aspect of the fifteenth embodiment, it is possible to activate the transactions by using the virtual currency as a fee regarding the transfer of the electronic content between the first client apparatus and the second client apparatus.

As one aspect of the fifteenth embodiment, the mediation fee generated when the mediation server apparatus mediates the electronic content is also generated even when the electronic content is purchased and even when the electronic content is sold, and thus, the content provider who provides the electronic content according to a legitimate route can compensates for losses when the electronic content is not purchased according to a sales route managed by the company of the content provider. Accordingly, the present embodiment is very useful.

As one aspect of the fifteenth embodiment, it is possible to increase the convenience of the user by analyzing the save data according to a certain rule, and classifying and sorting high-value data and non-high-value data.

As one aspect of the fifteenth embodiment, in a case where, it is possible to help a person who acquires the save data to decide the intention by confirming (trial play) the content of the data in a case where a summary of the save data is displayed or the save data is present on the server at the time of reselling the save data or transferring data usage rights.

As one aspect of the fifteenth embodiment, game software can be additionally sold to a person who wants to play the game in a case where there is the save data by notifying of the sales of the electronic contents based on criteria inputted by the user, and a sales promotion effect is obtained.

As one aspect of the fifteenth embodiment, the accuracy of the information can be ensured even though the manager is not present by using the blockchain technology for managing transactions, and there is an economic advantage that the operation costs can be suppressed at low costs.

In the fifteenth embodiment, the "client apparatus", the "electronic content", the "usage", the "available", and the "system" can adopt the contents described in the first embodiment in a necessary range.

In the fifteenth embodiment, the "billing process" and the "usage enabling information" can adopt the contents described in the second embodiment in a necessary range. The "virtual currency" and the "transfer" can adopt the contents described in the third embodiment in a necessary range. The "content management server apparatus" can adopt the contents described in the thirteenth embodiment in a necessary range.

In the fifteenth embodiment, the "at least a part of the contents of the electronic contents" refers to, for example, a part of all the electronic contents, and may be a continuous part or a non-continuous part in a case where all the electronic contents are not used. The "advancing at least a part of the contents" refers to, for example, a part of all the contents of the electronic contents, and may be any part in a case where all the electronic contents are not used.

### Sixteenth embodiment

Next, an outline of a sixteenth embodiment of the present invention will be described. In the following, an electronic content utilization system that includes a first client apparatus, a second client apparatus, and a management server apparatus will be described as an example.

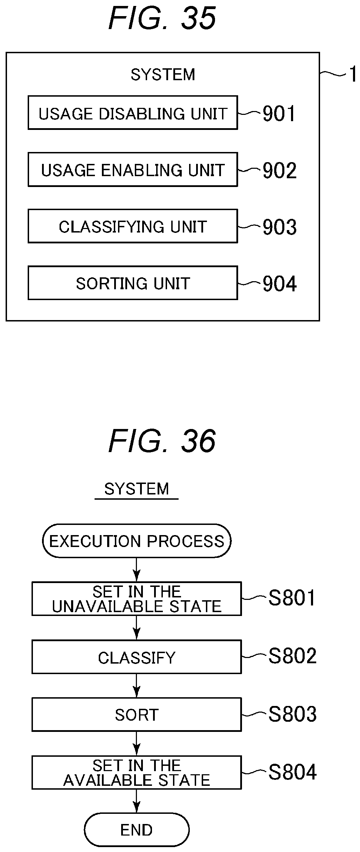

Fig. 35 is a block diagram showing a configuration of a system corresponding to at least one of the embodiments of the present invention. The system 1 includes at least a usage disabling unit 901, a usage enabling unit 902, a classifying unit 903, and a sorting unit 904.

The usage disabling unit 901 has a function of setting an electronic content available in the first client apparatus to be in an unavailable state. The usage enabling unit 902 has a function of setting the electronic content set in the unavailable state in the first client apparatus to be in an available state in the second client apparatus.

The classifying unit 903 has a function of classifying electronic contents based on information regarding the electronic contents. The sorting unit 904 has a function of sorting the electronic contents in a predetermined order based on the classification performed by the classifying unit 903.

Next, an execution process of utilizing the electronic content according to the sixteenth embodiment of the present invention will be described. Fig. 36 is a flowchart of the execution process corresponding to at least one of the embodiments of the present invention.

The system 1 sets the electronic content available in the first client apparatus to be in the unavailable state (step S801). Next, the system 1 classifies the electronic contents based on the information regarding the electronic contents (step S802).

Next, the system 1 sorts the electronic contents in a predetermined order based on the classification performed by the classifying unit 903 (step S803). Subsequently, the system 1 sets the electronic contents set in the unavailable state in the first client apparatus to be in the available state in the second client apparatus (step S804), and terminates the process.

As one aspect of the sixteenth embodiment, it is possible to provide a new system for utilizing the electronic content.

As one aspect of the sixteenth embodiment, the user can easily search for the electronic contents by classifying and arranging the electronic contents in the predetermined order based on the classification, and thus, it is possible to improve the convenience.

In the sixteenth embodiment, the "client apparatus", the "electronic content", the "usage", the "available", and the "system" can adopt the contents described in the first embodiment in a necessary range.

In the sixteenth embodiment, the "information regarding the electronic contents" refers to, for example, data of the electronic contents or information regarding the contents.

### Seventeenth embodiment

Next, an outline of a seventeenth embodiment of the present invention will be described. In the following, an electronic content utilization system that includes a first client apparatus, a second client apparatus, and a management server apparatus will be described as an example.

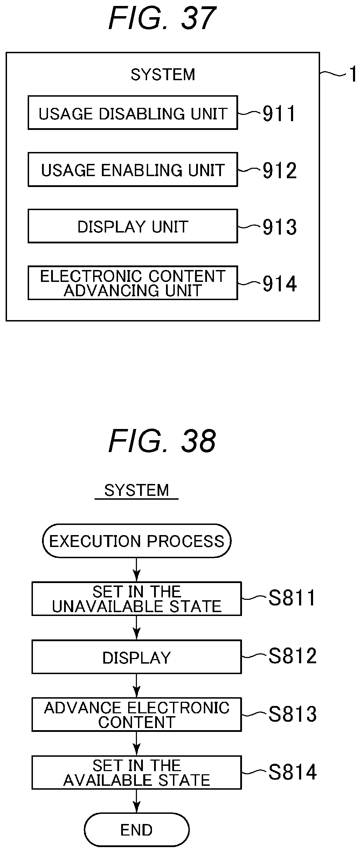

Fig. 37 is a block diagram showing a configuration of a system corresponding to at least one of the embodiments of the present invention. The system 1 includes at least a usage disabling unit 911, a usage enabling unit 912, a display unit 913, and an electronic content advancing unit 914.

The usage disabling unit 911 has a function of setting an electronic content available in the first client apparatus to be in an unavailable state. The usage enabling unit 912 has a function of setting the electronic content set in the unavailable state in the first client apparatus to be in an available state in the second client apparatus.

The display unit 913 has a function of displaying at least a part of the contents of the electronic contents in the first client apparatus or the second client apparatus. The electronic content advancing unit 914 has a function of advancing at least a part of the contents of the electronic contents according to an input operation on the first client apparatus or the second client apparatus without transferring the electronic content to the first client apparatus or the second client apparatus.

Next, an execution process of utilizing the electronic content according to the seventeenth embodiment of the present invention will be described. Fig. 38 is a flowchart of the execution process corresponding to at least one of the embodiments of the present invention.

The system 1 sets the electronic content available in the first client apparatus to be in the unavailable state (step S811). The system 1 displays at least a part of the contents of the electronic contents on the first client apparatus or the second client apparatus (step S812).

The system 1 advances at least a part of the contents of the electronic contents according to an input operation on the first client apparatus or the second client apparatus without transferring the electronic content to the first client apparatus or the second client apparatus (step S813). Subsequently, the system 1 sets the electronic content set in the unavailable state in the first client apparatus to be in the available state in the second client apparatus (step S814), and terminates the process.

As one aspect of the seventeenth embodiment, it is possible to provide a new system for utilizing the electronic content.

As one aspect of the seventeenth embodiment, the user can easily understand the contents of the electronic contents by displaying at least a part of the content of the electronic content, that is, visualizing the information, and thus, it is possible to help the user to decide the intention at the time of selecting the electronic content.

As one aspect of the seventeenth embodiment, the user can easily understand the content of the electronic content by advancing at least a part of the contents of the electronic contents according to the input operation of the user without transferring the content of the electronic content, and thus, it is possible to help the user to decide the intention at the time of selecting the electronic content.

In the seventeenth embodiment, the "client apparatus", the "electronic content", the "usage", the "available", and the "system" can adopt the contents described in the first embodiment in a necessary range.

In the seventeenth embodiment, the "at least a part of the contents of the electronic contents" and the "advancing at least a part of the contents" can adopt the contents described in the fifteenth embodiment in a necessary range.

### [Appendix]

The above-described embodiments have been described so that those skilled in the art can implement the following invention.

[1] An electronic content utilization system that comprises a first client apparatus and a second client apparatus, the system comprising:
   a usage disabler that sets an electronic content available in the first client apparatus to be in an unavailable state; and
   a usage enabler that sets the electronic content set in the unavailable state in the first client apparatus to be in an available state in the second client apparatus,
   wherein the usage enabler sets the electronic content to be in the available state in the second client apparatus when a predetermined condition for usage is satisfied.
[2] The electronic content utilization system according to [1], further comprising a management server apparatus,
   wherein the management server apparatus comprises a usage enabling information transmitter that transmits usage enabling information for setting the electronic content to be in the available state in the second client apparatus to the second client apparatus when a billing process is performed by a second user who operates the second client apparatus,
   wherein the second client apparatus comprises a usage enabling information receiver that receives the usage enabling information from the management server apparatus, and
   wherein the condition for usage comprises a condition that the usage enabling information received by the second client apparatus is usage enabling information corresponding to an electronic content as a target for usage enabling.
[3] The electronic content utilization system according to [1] or [2], further comprising:
   a first virtual currency data storage that stores a virtual currency associated with the first client apparatus or a first user who operates the first client apparatus;
   a virtual currency adder that adds a virtual currency corresponding to setting the electronic content to be in the unavailable state in the first client apparatus to the virtual currency stored in the first virtual currency data storage;
   a second virtual currency data storage that stores a virtual currency associated with the second client apparatus or a second user who operates the second client apparatus; and
   a virtual currency subtractor that subtracts a virtual currency corresponding to setting the electronic content to be in the available state in the second client apparatus from the virtual currency stored in the second virtual currency data storage.
[4] The electronic content utilization system according to [3], further comprising a management server apparatus,
   wherein the usage enabler sets a new electronic content to be in the available state in the first client apparatus,
   wherein the virtual currency subtractor subtracts a virtual currency corresponding to setting the new electronic content to be in the available state in the first client apparatus from the virtual currency stored in the first virtual currency data storage, and
   wherein the virtual currency corresponding to setting the new electronic content to be in the available state in the first client apparatus is equal to or greater than a sum of a virtual currency corresponding to setting the new electronic content to be in the unavailable state in the first client apparatus and a virtual currency corresponding to setting the new electronic content to be in the available state in the second client apparatus.
[5] The electronic content utilization system according to any one of [1] to [4], wherein the electronic content is an electronic book, a game, audio and/or video.
[6] A program causing a first client apparatus to function in an electronic content utilization system that comprises the first client apparatus and a second client apparatus, and comprises a usage enabler that sets an electronic content set in an unavailable state in the first client apparatus to be in an available state in the second client apparatus, and wherein the usage enabler sets the electronic content to be in the available state in the second client apparatus when a predetermined condition for usage is satisfied, the program causing the first client apparatus to function as:
   a usage disabler that sets the electronic content available in the first client apparatus to be in the unavailable state.
[7] A first client apparatus having the program according to [6] installed thereon.
[8] A program causing a second client apparatus to function in an electronic content utilization system that comprises a first client apparatus, and the second client apparatus, and comprises a usage disabler that sets an electronic content available in the first client apparatus to be in an unavailable state, the program causing the second client apparatus to function as:
   a usage enabler that sets the electronic content set in the unavailable state in the first client apparatus to be in an available state in the second client apparatus,
   wherein the usage enabler sets the electronic content to be in the available state in the second client apparatus when a predetermined condition for usage is satisfied.
[9] A second client apparatus having the program according to [8] installed thereon.
[10] An electronic content utilization method performed in an electronic content utilization system that comprises a first client apparatus and a second client apparatus, the method comprising:
   setting an electronic content available in the first client apparatus to be in an unavailable state; and
   setting the electronic content set in the unavailable state in the first client apparatus to be in an available state in the second client apparatus,
   wherein, in the setting of the electronic content to be in the available state in the second client apparatus, the electronic content is set to be in the available state in the second client apparatus when a predetermined condition for usage is satisfied.
[11] An electronic content utilization system that comprises a first client apparatus, a second client apparatus, a mediation server apparatus capable of being connected to the first client apparatus and the second client apparatus through communication, and a management server apparatus capable of being connected to the mediation server apparatus through communication, the system comprising:
   a usage disabler that sets an electronic content to be in an unavailable state in the first client apparatus when a transfer request of the electronic content available in the first client apparatus is received by the mediation server apparatus from the first client apparatus and/or a buying request of the electronic content is received by the mediation server apparatus from the second client apparatus; and
   a usage enabler that sets the electronic content set in the unavailable state in the first client apparatus to be in an available state in the second client apparatus when the buying request of the electronic content is received by the mediation server apparatus from the second client apparatus,
   wherein the mediation server apparatus comprises a trading information transmitter that transmits trading information regarding selling of the electronic content in the first client apparatus and/or buying of the electronic content in the second client apparatus to the management server apparatus, and
   wherein the management server apparatus comprises a trading information receiver that receives the trading information from the mediation server apparatus.
[12] The electronic content utilization system according to [11], further comprising:
   a first virtual currency data storage that stores a virtual currency associated with the first client apparatus or a first user who operates the first client apparatus;
   a virtual currency adder that adds a virtual currency corresponding to setting the electronic content to be in the unavailable state to the virtual currency stored in the first virtual currency data storage;
   a third virtual currency data storage that stores a virtual currency associated with the mediation server apparatus; and
   a virtual currency subtractor that subtracts a virtual currency corresponding to setting the electronic content to be in the unavailable state from the virtual currency stored in the third virtual currency data storage.
[13] The electronic content utilization system according to [11] or [12], further comprising:
   a second virtual currency data storage that stores a virtual currency associated with the second client apparatus or a second user who operates the second client apparatus;
   a virtual currency subtractor that subtracts a virtual currency corresponding to setting the electronic content to be in the available state from the virtual currency stored in the second virtual currency data storage;
   a third virtual currency data storage that stores a virtual currency associated with the mediation server apparatus; and
   a virtual currency adder that adds a virtual currency corresponding to setting the electronic content to be in the available state to the virtual currency stored in the third virtual currency data storage.
[14] A program causing a first client apparatus to function in an electronic content utilization system that comprises the first client apparatus, a second client apparatus, a mediation server apparatus capable of being connected to the first client apparatus and the second client apparatus through communication, and a management server apparatus capable of being connected to the mediation server apparatus through communication, and comprises a usage enabler that sets an electronic content set in an unavailable state in the first client apparatus to be in an available state in the second client apparatus when a buying request of the electronic content is received by the mediation server apparatus from the second client apparatus, and wherein the mediation server apparatus comprises a trading information transmitter that transmits trading information regarding selling of the electronic content in the first client apparatus and/or buying of the electronic content in the second client apparatus to the management server apparatus, and wherein the management server apparatus comprises a trading information receiver that receives the trading information from the mediation server apparatus, the program causing the first client apparatus to function as a usage disabler that sets the electronic content to be in the unavailable state in the first client apparatus when a transfer request of the electronic content available in the first client apparatus is received by the mediation server apparatus from the first client apparatus and/or a buying request of the electronic content is received by the mediation server apparatus from the second client apparatus.
[15] A first client apparatus having the program according to [14] installed thereon.
[16] A program causing a second client apparatus to function in an electronic content utilization system that comprises a first client apparatus, the second client apparatus, a mediation server apparatus capable of being connected to the first client apparatus and the second client apparatus through communication, and a management server apparatus capable of being connected to the mediation server apparatus through communication, and comprises a usage disabler that sets an electronic content to be in an unavailable state in the first client apparatus when a transfer request of the electronic content available in the first client apparatus is received by the mediation server apparatus from the first client apparatus and/or a buying request of the electronic content is received by the mediation server apparatus from the second client apparatus, and wherein the mediation server apparatus comprises a trading information transmitter that transmits trading information regarding selling of the electronic content in the first client apparatus and/or buying of the electronic content in the second client apparatus to the management server apparatus, and wherein the management server apparatus comprises a trading information receiver that receives the trading information from the mediation server apparatus, the program causing the second client apparatus to function as
   a usage enabler that sets the electronic content set in the unavailable state in the first client apparatus to be in an available state in the second client apparatus when the buying request of the electronic content is received by the mediation server apparatus from the second client apparatus.
[17] A second client apparatus having the program according to [16] installed thereon.
[18] A program causing a mediation server apparatus to function in an electronic content utilization system that comprises a first client apparatus, a second client apparatus, the mediation server apparatus capable of being connected to the first client apparatus and the second client apparatus through communication, and a management server apparatus capable of being connected to the mediation server apparatus through communication, and comprises a usage disabler that sets an electronic content to be in an unavailable state in the first client apparatus when a transfer request of the electronic content available in the first client apparatus is received by the mediation server apparatus from the first client apparatus and/or a buying request of the electronic content is received by the mediation server apparatus from the second client apparatus, and a usage enabler that sets the electronic content set in the unavailable state in the first client apparatus to be in an available state in the second client apparatus when the buying request of the electronic content is received by the mediation server apparatus from the second client apparatus, and wherein the management server apparatus comprises a trading information receiver that receives trading information from the mediation server apparatus, the program causing the mediation server apparatus to function as a trading information transmitter that transmits trading information regarding selling of the electronic content in the first client apparatus and/or buying of the electronic content in the second client apparatus to the management server apparatus.
[19] A mediation server apparatus having the program according to [18] installed thereon.
[20] A program causing a management server apparatus to function in an electronic content utilization system that comprises a first client apparatus, a second client apparatus, a mediation server apparatus capable of being connected to the first client apparatus and the second client apparatus through communication, and the management server apparatus capable of being connected to the mediation server apparatus through communication, and comprises a usage disabler that sets an electronic content to be in an unavailable state in the first client apparatus when a transfer request of the electronic content available in the first client apparatus is received by the mediation server apparatus from the first client apparatus and/or a buying request of the electronic content is received by the mediation server apparatus from the second client apparatus, and a usage enabler that sets the electronic content set in the unavailable state in the first client apparatus to be in an available state in the second client apparatus when the buying request of the electronic content is received by the mediation server apparatus from the second client apparatus, and wherein the mediation server apparatus comprises a trading information transmitter that transmits trading information regarding selling of the electronic content in the first client apparatus and/or buying of the electronic content in the second client apparatus to the management server apparatus, the program causing the management server apparatus to function as a trading information receiver that receives the trading information from the mediation server apparatus.
[21] A management server apparatus having the program according to [20] installed thereon.
[22] An electronic content utilization method performed in an electronic content utilization system that comprises a first client apparatus, a second client apparatus, a mediation server apparatus capable of being connected to the first client apparatus and the second client apparatus through communication, and a management server apparatus capable of being connected to the mediation server apparatus through communication, the method comprising:
   setting an electronic content to be in an unavailable state in the first client apparatus when a transfer request of the electronic content available in the first client apparatus is received by the mediation server apparatus from the first client apparatus and/or a buying request of the electronic content is received by the mediation server apparatus from the second client apparatus;
   setting the electronic content set in the unavailable state in the first client apparatus to be in an available state in the second client apparatus when the buying request of the electronic content is received by the mediation server apparatus from the second client apparatus;
   transmitting, by the mediation server apparatus, trading information regarding selling of the electronic content in the first client apparatus and/or buying of the electronic content in the second client apparatus to the management server apparatus; and
   receiving, by the management server apparatus, the trading information from the mediation server apparatus.
[23] The electronic content utilization system according to any one of [1] to [5], further comprising:
   a classifier that classifies electronic contents based on information regarding the electronic contents; and
   a sorter that sorts the electronic contents in a predetermined order based on the classification.
[24] The electronic content utilization system according to any one of [1] to [5], and [23], further comprising:
   a display that displays at least a part of contents of the electronic content in the first client apparatus or the second client apparatus; and
   an electronic content advancer that advances at least a part of the contents of the electronic content according to an input operation in the first client apparatus or the second client apparatus without transferring the electronic content to the first client apparatus or the second client apparatus.
[25] The electronic content utilization system according to any one of [1] to [5], [23], and [24], further comprising:
   an information accepter that accepts registration of reference information as a notification reference through an input operation of a first user or a second user; and
   a notifier that notifies the first user or the second user who registers the reference information of the information regarding the electronic contents.
[26] The electronic content utilization system according to any one of [1] to [5], and [23] to [25],
   wherein a blockchain is used for the usage enabler.

### Reference Signs List

- 1: SYSTEM
- 2: COMMUNICATION NETWORK
- 3: FIRST CLIENT APPARATUS
- 4: SECOND CLIENT APPARATUS
- 5: MANAGEMENT SERVER APPARATUS
- 6: MEDIATION SERVER APPARATUS
- 7: MANAGEMENT SERVER APPARATUS
- 8: CONTENT MANAGEMENT SERVER APPARATUS
- 11: CONTROLLER
- 12: RAM
- 13: STORAGE
- 14: SOUND PROCESSOR
- 15: GRAPHICS PROCESSOR
- 16: EXTERNAL STORAGE MEDIUM READING UNIT
- 17: COMMUNICATION INTERFACE
- 18: INTERFACE UNIT
- 20: INPUT UNIT
- 21: SOUND OUTPUT DEVICE
- 22: DISPLAY DEVICE
- 23: DISPLAY SCREEN
- 24: EXTERNAL STORAGE MEDIUM
- 31: CONTROLLER
- 32: RAM
- 33: STORAGE
- 34: COMMUNICATION INTERFACE

## Claims

1. An electronic content utilization system that comprises a first client apparatus and a second client apparatus, the system comprising:
a usage disabler that sets an electronic content available in the first client apparatus to be in an unavailable state; and
a usage enabler that sets the electronic content set in the unavailable state in the first client apparatus to be in an available state in the second client apparatus,
wherein the usage enabler sets the electronic content to be in the available state in the second client apparatus when a predetermined condition for usage is satisfied.

2. The electronic content utilization system according to claim 1, further comprising a management server apparatus,
wherein the management server apparatus comprises a usage enabling information transmitter that transmits usage enabling information for setting the electronic content to be in the available state in the second client apparatus to the second client apparatus when a billing process is performed by a second user who operates the second client apparatus,
wherein the second client apparatus comprises a usage enabling information receiver that receives the usage enabling information from the management server apparatus, and
wherein the condition for usage comprises a condition that the usage enabling information received by the second client apparatus is usage enabling information corresponding to an electronic content as a target for usage enabling.

3. The electronic content utilization system according to claim 1 or 2, further comprising:
a first virtual currency data storage that stores a virtual currency associated with the first client apparatus or a first user who operates the first client apparatus;
a virtual currency adder that adds a virtual currency corresponding to setting the electronic content to be in the unavailable state in the first client apparatus to the virtual currency stored in the first virtual currency data storage;
a second virtual currency data storage that stores a virtual currency associated with the second client apparatus or a second user who operates the second client apparatus; and
a virtual currency subtractor that subtracts a virtual currency corresponding to setting the electronic content to be in the available state in the second client apparatus from the virtual currency stored in the second virtual currency data storage.

4. The electronic content utilization system according to claim 3, further comprising a management server apparatus,
wherein the usage enabler sets a new electronic content to be in the available state in the first client apparatus,
wherein the virtual currency subtractor subtracts a virtual currency corresponding to setting the new electronic content to be in the available state in the first client apparatus from the virtual currency stored in the first virtual currency data storage, and
wherein the virtual currency corresponding to setting the new electronic content to be in the available state in the first client apparatus is equal to or greater than a sum of a virtual currency corresponding to setting the new electronic content to be in the unavailable state in the first client apparatus and a virtual currency corresponding to setting the new electronic content to be in the available state in the second client apparatus.

5. The electronic content utilization system according to any one of claims 1 to 4, further comprising:
a classifier that classifies electronic contents based on information regarding the electronic contents; and
a sorter that sorts the electronic contents in a predetermined order based on the classification.

6. The electronic content utilization system according to any one of claims 1 to 5, further comprising:
a display that displays at least a part of contents of the electronic content in the first client apparatus or the second client apparatus; and
an electronic content advancer that advances at least a part of the contents of the electronic content according to an input operation in the first client apparatus or the second client apparatus without transferring the electronic content to the first client apparatus or the second client apparatus.

7. A program causing a first client apparatus to function in an electronic content utilization system that comprises the first client apparatus and a second client apparatus, and comprises a usage enabler that sets an electronic content set in an unavailable state in the first client apparatus to be in an available state in the second client apparatus, and wherein the usage enabler sets the electronic content to be in the available state in the second client apparatus when a predetermined condition for usage is satisfied, the program causing the first client apparatus to function as:
a usage disabler that sets the electronic content available in the first client apparatus to be in the unavailable state.

8. A program causing a second client apparatus to function in an electronic content utilization system that comprises a first client apparatus, and the second client apparatus, and comprises a usage disabler that sets an electronic content available in the first client apparatus to be in an unavailable state, the program causing the second client apparatus to function as:
a usage enabler that sets the electronic content set in the unavailable state in the first client apparatus to be in an available state in the second client apparatus,
wherein the usage enabler sets the electronic content to be in the available state in the second client apparatus when a predetermined condition for usage is satisfied.

9. An electronic content utilization method performed in an electronic content utilization system that comprises a first client apparatus and a second client apparatus, the method comprising:
setting an electronic content available in the first client apparatus to be in an unavailable state; and
setting the electronic content set in the unavailable state in the first client apparatus to be in an available state in the second client apparatus,
wherein, in the setting of the electronic content to be in the available state in the second client apparatus, the electronic content is set to be in the available state in the second client apparatus when a predetermined condition for usage is satisfied.

10. An electronic content utilization system that comprises a first client apparatus, a second client apparatus, a mediation server apparatus capable of being connected to the first client apparatus and the second client apparatus through communication, and a management server apparatus capable of being connected to the mediation server apparatus through communication, the system comprising:
a usage disabler that sets an electronic content to be in an unavailable state in the first client apparatus when a transfer request of the electronic content available in the first client apparatus is received by the mediation server apparatus from the first client apparatus and/or a buying request of the electronic content is received by the mediation server apparatus from the second client apparatus; and
a usage enabler that sets the electronic content set in the unavailable state in the first client apparatus to be in an available state in the second client apparatus when the buying request of the electronic content is received by the mediation server apparatus from the second client apparatus,
wherein the mediation server apparatus comprises a trading information transmitter that transmits trading information regarding selling of the electronic content in the first client apparatus and/or buying of the electronic content in the second client apparatus to the management server apparatus, and
wherein the management server apparatus comprises a trading information receiver that receives the trading information from the mediation server apparatus.
